# EUROPEAN PATENT SPECIFICATION

(11) **EP 3 333 056 B1**
(45) Date of publication and mention of the grant of the patent: **28.07.2021**
(21) Application number: 17183652.1
(22) Date of filing: 28.07.2017
(51) Int. Cl.: B62J 11/00, B60R 25/33, B62H 5/00

(54) **STRADDLED VEHICLE AND METHOD OF ATTACHING TRACKING DEVICE TO STRADDLED VEHICLE**
GRÄTSCHSITZFAHRZEUG UND VERFAHREN ZUR BEFESTIGUNG EINER VERFOLGUNGSVORRICHTUNG AN DAS GRÄTSCHSITZFAHRZEUG
VÉHICULE À ENFOURCHER ET PROCÉDÉ DE FIXATION DE DISPOSITIF DE SUIVI POUR VÉHICULE À ENFOURCHER

(30) Priority: 06.12.2016 JP 2016237054
(43) Date of publication of application: 13.06.2018
(73) Proprietor: Yamaha Hatsudoki Kabushiki Kaisha, Iwata-shi Shizuoka 438-8501 (JP)
(72) Inventor: TOMINAGA, Shuji, Iwata-shi, Shizuoka 438-8501 (JP)
(74) Representative: Grünecker Patent- und Rechtsanwälte PartG mbB

(56) References cited:
- WO-A2-2009/010065
- DE-A1-102005 001 209
- JP-A- 2007 062 606
- JP-A- 2009 101 893
- US-A- 6 073 719

## Description

The present invention relates to a straddled vehicle according to the preamble of independent claim 1. Moreover, it relates to a method of attaching a tracking device to a straddled vehicle according to the preamble of independent claim 11.

According to the closest prior art disclosed in US 6 073 719 A, a body structure of a motorcycle such as a scooter includes two footboards between which a floor tunnel substantially in the shape of an inverted letter U is located. Each footboard is provided with a horizontal footrest and a side edge symmetrically folded downward and inward so as to form a sidewall. The footrest, the sidewall and a transmission casing housed in the floor tunnel define a hollow space therebetween. This space is respectively formed below the left and right footrests.

A tracking device is provided in a vehicle in order to track the vehicle when the vehicle is stolen. In general, a straddled vehicle such as a motorcycle and the like does not have a driver's cabin, but has a seat exposed outside. The tracking device is configured to radio-transmit a current position of the vehicle to an administrator of the tracking device. Thus, in order to ensure good communication environment while protecting the tracking device from rainwater and the like, it is necessary to provide the tracking device in a limited space in the straddled vehicle. In a scooter-type motorcycle as recited in JP 4189154 B2, which shows the features of the preamble of claim 1 and 11, an anti-theft device (tracking device) is installed in a helmet housing space provided under a seat.

For the motorcycle as recited in the above-described JP 4189154 B2, if a thief can remove the seat, he/she can easily remove the tracking device installed in the helmet housing space. In view of the removal of the tracking device by the thief, the tracking device is preferably provided at a position that is much less likely to be accessed from the outside of the straddled vehicle stand.

An object of the present invention is to provide a straddled vehicle in which communication environment for a tracking device is ensured while the tracking device is protected from rainwater, and difficulty in removal of the tracking device from the vehicle can be increased, and a method of attaching the tracking device to the straddled vehicle. According to the present invention said object is solved by a straddled vehicle having the features of independent claim 1. Moreover, said object is also solved by a method of attaching a tracking device to a straddled vehicle having the features of independent claim 11. Preferred embodiments are laid down in the dependent claims.
(1) A straddled vehicle according to one aspect of the present invention comprises a vehicle body frame, a vehicle component supported by the vehicle body frame, a pair of right and left foot boards extending in a vehicle front-and-rear direction, a tunnel cover provided to surround a space above and between the pair of foot boards from above, right and left, a pair of right and left side covers formed to extend downward from the right foot board and the left foot board, respectively, and a tracking device, wherein the tunnel cover is configured to store part of the vehicle body frame and at least part of the vehicle component, a storage space storing the tracking device is formed below at least one foot board of the pair of foot boards, the storage space being positioned inside of the pair of side covers, and overlapping with the at least one foot board in a vehicle plan view and overlapping with the pair of side covers in a vehicle side view, the storage space being arranged to overlap with at least one of another portion excluding the part of the vehicle body frame and another portion excluding the part of the vehicle component in the vehicle side view, the storage space is provided with an attachment member to which the tracking device is attached, the vehicle component includes an engine, the storage space is configured to overlap with the engine in the vehicle side view, the storage space is configured to overlap with the other portion of the vehicle body frame in the vehicle side view, and the other portion of the vehicle body frame is arranged between the engine and the storage space in the vehicle plan view, such that noises generated from the engine are absorbed by the vehicle body frame during operation of the engine and such that the tracking device is not affected by the noises generated from the engine.
   In the straddled vehicle, the storage space is formed below the at least one foot board. The storage space is positioned inside of the pair of side covers and overlaps with the least one foot board in the vehicle plan view. The storage space also overlaps with the pair of side covers in the vehicle side view. In this case, the storage space is protected from rainwater by the foot board and the side cover. Also, a radio wave absorber for blocking radio communication is not present in a space above the foot board. As such, good communication environment for the tracking device can be ensured when the tracking device is attached to the attachment member in the storage space.
   Further, with the above configuration, the side cover is present on one side of the storage space, while at least one of another portion of the vehicle body frame and another portion of the vehicle component is present on another side of the storage space. As such, it is difficult to access the storage space from the right and left sides of the vehicle. In addition, since the storage space is present at a position close to a road surface, a thief in a standing position cannot remove the tracking device in the storage space.
   As a result, it becomes possible to ensure the communication environment for the tracking device while protecting the tracking device from rainwater and also to increase difficulty in removal of the tracking device from the vehicle.
   Further, the tracking device is protected from rainwater, and the communication environment for the tracking device is ensured. Thus, it is possible to easily and accurately confirm a current position of the straddled vehicle by use of the tracking device while the tracking device is not removed from the vehicle.
   Further, with the above-mentioned configuration, the engine makes it difficult to access the storage space from a position opposite to the storage space in the straddled vehicle in the vehicle right-and-left direction.
   Further, with the above-mentioned configuration, noises generated from the engine are absorbed by the vehicle body frame. Accordingly, the tracking device attached to the storage space is not affected by the noises generated from the engine. Thus, better communication environment for the tracking device can be ensured.
(2) The tracking device may be arranged such that a center portion of the tracking device in a vehicle right-and-left direction is positioned further inward in the vehicle right-and-left direction than a center portion of the at least one foot board in the vehicle right-and-left direction.
   In this case, the tracking device is arranged at a position in proximity to at least one of the other portion of the vehicle body frame and the other portion of the vehicle component in a space below the at least one foot board. Thus, since no work space for removing the tracking device is formed, it becomes difficult to remove the tracking device.
(3) The tracking device may be arranged such that an inner edge of the tracking device in the vehicle right-and-left direction is positioned further inward in the vehicle right-and-left direction than an outermost edge of the tunnel cover in the vehicle right-and-left direction.
   In this case, the inner edge of the tracking device in the vehicle right-and-left direction of the tracking device is arranged at a position closer to at least one of the other portion of the vehicle body frame and the other portion of the vehicle component. Thus, since no work space for removing the tracking device is formed, it becomes difficult to remove the tracking device.
(4) The tracking device may include an antenna for acquiring information as to a current position of the straddled vehicle, a communication device that is configured to radio-transmit the information as to the current position acquired by the antenna to an outside of the straddled vehicle, and a holding member that is configured to hold the antenna and the communication device, and the holding member may be attached to the attachment member by use of a shear bolt.
   In this case, the antenna and the communication device are integrally held by the holding member, and the holding member is attached to the attachment member by the shear bolt. This facilitates the work for attaching the tracking device to the straddled vehicle. Moreover, it is impossible to remove the holding member from the attachment member after attaching the holding member to the attachment member. It is thus possible to further increase the difficulty in removal of the tracking device from the vehicle.
(5) The attachment member may have an insertion hole in which the shear bolt is inserted, and the insertion hole may be opened such that an axis of the insertion hole is directed outward of the side cover corresponding to the at least one foot board.
   In this case, in removal of the side cover to attach the tracking device to the attachment member, it is possible to easily insert the shear bolt into the insertion hole of the attachment member from a position lateral to the vehicle. This makes the tracking device attachment work easier.
(6) The straddled vehicle may further include a battery, and a harness used as a power supply line that supplies power from at least the battery to the communication device, the communication device may include a connector to which the harness is connected, and the holding member may include a connector peripheral wall provided to surround a periphery of the connector.
   In this case, the connector of the communication device is protected by the connector peripheral wall of the holding member. Thus, the connector of the communication device is prevented from destruction, and the supply of power from the battery to the communication device is ensured. As a result, invalidation of various functions of the tracking device is prevented.
(7) The tracking device may further include a fastening member that is configured to fasten the communication device to the holding member, and the holding member may include a holding plate to which the communication device is fastened by the fastening member, and a fastening member peripheral wall provided on the holding plate so as to surround a periphery of the fastening member while the communication device is fastened to the holding member by the fastening member.
   In this case, the fastening member is protected by the fastening member peripheral wall of the holding member. Thus, the communication device is prevented from being removed from the holding member.
(8) The straddled vehicle may further include a radiator, and a cooling pipe that is configured to cause a coolant to flow between the engine and the radiator, the radiator may be provided in front of the storage space in a vehicle front-and-rear direction so as to overlap with the storage space in a vehicle front view, and the cooling pipe may be provided at a position below the storage space so as to overlap with the storage space in the vehicle plan view.
   In this case, the radiator makes it more difficult to access the storage space from a position in front of the straddled vehicle. Also, the cooling pipe makes it more difficult to access the storage space from a position below the straddled vehicle.
(9) The straddled vehicle may further include a radiator fan provided at the radiator, and an exhaust pipe connected to an exhaust port of the engine, the engine may have an oil element, and at least part of the radiator fan, at least part of the oil element, and at least part of the exhaust pipe may be provided at positions further downward than the storage space so as to overlap with the tunnel cover in the vehicle plan view.
   In this case, the at least part of the radiator fan, the at least part of the oil element, and the at least part of the exhaust pipe are arranged at the positions, which are further downward than the storage space and directly downward of the tunnel cover. This makes it more difficult to access the storage space from a position below the straddled vehicle which is opposite to the storage space in the vehicle right-and-left direction.
(10) The straddled vehicle may further include a stand provided to be capable of supporting the vehicle on a road surface, and the storage space may be positioned further downward when the vehicle is supported by the stand than when the vehicle stands upright.
   With the above-mentioned configuration, the storage space is closer to the road surface when the vehicle is supported by the stand. Thus, a gap between the side cover covering the storage space and the road surface becomes smaller. This makes it possible to further increase the difficultly in removal of the tracking device arranged in the storage space from the vehicle.
(11) Another aspect of the present invention is a method of attaching a tracking device to a straddled vehicle, the straddled vehicle comprising a vehicle body frame, a vehicle component supported by the vehicle body frame, a pair of right and left foot boards extending in a vehicle front-and-rear direction, a tunnel cover provided to surround a space above and between the pair of foot boards from above, right and left, and a pair of right and left side covers formed to extend downward from the right foot board and the left foot board, respectively, wherein the tunnel cover is configured to store part of the vehicle body frame and at least part of the vehicle component, a storage space is formed below at least one foot board of the pair of foot boards, the storage space being positioned inside of the pair of side covers, and overlapping with the at least one foot board in a vehicle plan view and overlapping with the pair of side covers in a vehicle side view, the storage space being arranged to overlap with at least one of another portion excluding the part of the vehicle body frame and another portion excluding the part of the vehicle component in the vehicle side view, wherein the method includes the steps of: removing the side cover under the at least one foot board; and attaching the tracking device to be positioned in the storage space by use of an attachment member, and wherein the vehicle component includes an engine, the storage space is configured to overlap with the engine in the vehicle side view, the storage space is configured to overlap with the other portion of the vehicle body frame in the vehicle side view, and the other portion of the vehicle body frame is arranged between the engine and the storage space in the vehicle plan view, such that noises generated from the engine are absorbed by the vehicle body frame during operation of the engine and such that the tracking device is not affected by the noises generated from the engine.

In the attaching method, the side cover under the at least one foot board is removed, and the tracking device is attached to the attachment member in the storage space. Thus, no cumbersome work is required to attach the tracking device to the straddled vehicle.

In the straddled vehicle, to which the tracking device is attached as described above, the tracking device in the storage space is protected from rainwater by the foot boards and the side covers. Also, a radio wave absorber for blocking radio communication is not present in a space above the foot boards. As such, good communication environment for the tracking device in the storage device can be ensured.

Further, the side cover is present on one side of the storage space, while at least one of the other portion of the vehicle body frame and the other portion of the vehicle component is present on another side of the storage space. As such, it is difficult to access the tracking device in the storage space from the right and left sides of the vehicle. In addition, since the storage space is present at a position close to a road surface, a thief in a standing position cannot remove the tracking device in the storage space.

As a result, it becomes possible to ensure the communication environment for the tracking device while protecting the tracking device from rainwater and also to increase difficulty in removal of the tracking device from the vehicle.
Fig. 1 is a side view showing a schematic configuration of a motorcycle according to one embodiment of the present invention;
Fig. 2 is a schematic plan view of the motorcycle for mainly explaining a positional relationship between a storage space and a left foot board of Fig. 1;
Fig. 3 is a left side view mainly showing a vehicle body frame and an engine;
Fig. 4 is a front view mainly showing the vehicle body frame and the engine;
Fig. 5 is a plan view mainly showing the vehicle body frame and the engine;
Fig. 6 is a bottom view mainly showing the vehicle body frame and the engine;
Fig. 7 is a cut portion end view of a left half portion of the motorcycle taken along a vertical face including the line A-A of Fig. 1;
Figs. 8(a) and 8(b) are schematic views showing a relationship between a position of the storage space when a side stand of Fig. 1 is in a non-support state and a position of the storage space when the side stand is in a support state;
Fig. 9 is a perspective view of the appearance of the tracking device as viewed from one direction;
Fig. 10 is a perspective view of the appearance of the tracking device of Fig. 9 as viewed from another direction;
Fig. 11 is a side view of the tracking device of Fig. 9;
Fig. 12 is a plan view of a holding member included in the tracking device of Fig. 9;
Fig. 13 is a side view of the holding member of Fig. 12 as viewed from the arrowed direction Q1;
Fig. 14 is a side view of the holding member of Fig. 12 as viewed from the arrowed direction Q2;
Fig. 15 is a partially enlarged side view of the motorcycle showing a method of attaching the tracking device;
Fig. 16 is a partially enlarged side view of the motorcycle showing the method of attaching the tracking device;
Fig. 17 is a partially enlarged side view of the motorcycle showing the method of attaching the tracking device; and
Fig. 18 is a schematic side view of a motorcycle according to a not claimed embodiment.

A straddled vehicle according to one embodiment of the present invention will be described below with reference to the drawings. In the following description, a motorcycle will be described as one example of the straddled vehicle.

### [1] Schematic Configuration of Motorcycle

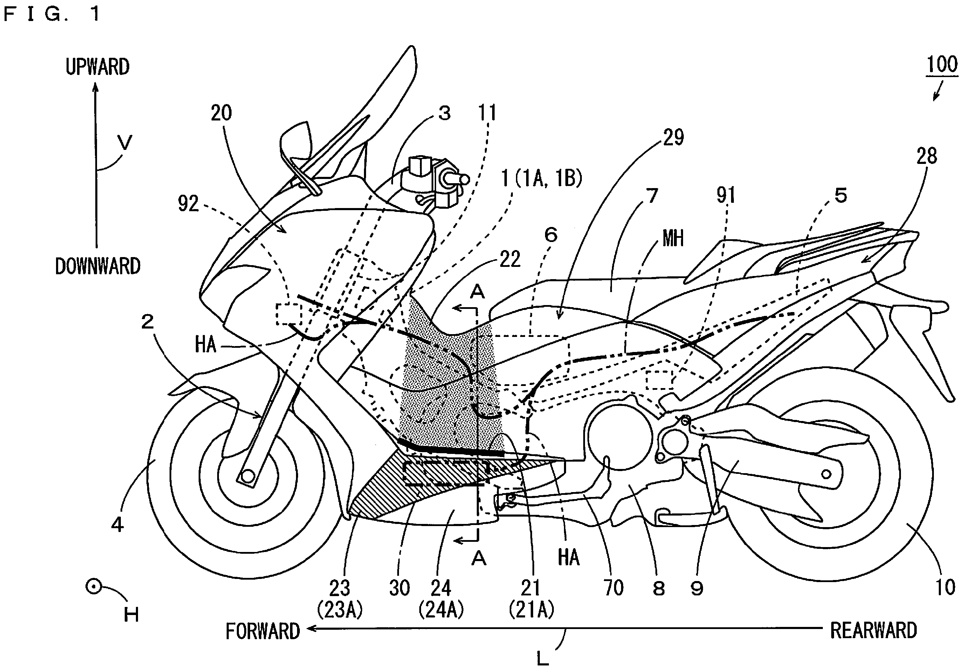

Fig. 1 is a side view showing a schematic configuration of the motorcycle according to the one embodiment of the present invention. Fig. 1 shows the motorcycle 100 standing upright perpendicularly to a road surface. In Fig. 1 and part of subsequent drawings, arrows indicate a front-and-rear direction L, a right-and-left direction H and a top-and-bottom direction V of the motorcycle 100 as appropriate. In the following description, a direction in which an arrow is directed in the front-and-rear direction L is referred to as forward, and its opposite direction is referred to as rearward. A direction in which an arrow is directed in the right-and-left direction H is referred to as leftward, and its opposite direction is referred to as rightward. Further, a direction in which an arrow is directed in the top-and-bottom direction V is referred to as upward, and its opposite direction is referred to as downward.

A vehicle plan view means viewing the motorcycle 100 downward from a position above the motorcycle 100 or viewing the motorcycle 100 upward from a position below the motorcycle 100. A vehicle side view means viewing the motorcycle 100 leftward from a position rightward of the motorcycle 100 or viewing the motorcycle 100 rightward from a position leftward of the motorcycle 100. A vehicle front view means viewing the motorcycle 100 rearward from a position in front of the motorcycle 100.

The motorcycle 100 of Fig. 1 includes a vehicle body frame 1 provided in a vehicle front half portion of the motorcycle 100. A head pipe 11 is provided at a front end of the vehicle body frame 1. The vehicle body frame 1 is formed to branch to the right and left from the head pipe 11 and extend obliquely downward. In the following description, a portion of the vehicle body frame 1 extending leftward is referred to as a left frame 1A, and a portion of the vehicle body frame 1 extending rightward is referred to as a right frame 1B as necessary.

A front fork 2 is provided at the head pipe 11 to be swingable in the right-and-left direction H via a steering shaft not shown. A handle 3 is attached to an upper end of the front fork 2, and a front wheel 4 is rotatably attached to a lower end of the front fork 2.

A rear frame 5 is provided at a position rearward of the vehicle body frame 1. The rear frame 5 is connected to a rear end of the vehicle body frame 1 to extend in the front-and-rear direction L in a vehicle rear half portion of the motorcycle 100. A fuel tank 6 is provided above a rear end portion of the vehicle body frame 1 and a front end portion of the rear frame 5. A seat 7 is provided to extend from a position above the fuel tank 6 to a position above a rear half portion of the rear frame 5 in the front-and-rear direction L.

An engine 8 is provided at a lower portion of the center of the motorcycle 100. The engine 8 is supported by the vehicle body frame 1 such that a front portion of the engine 8 is arranged between the left frame 1A and the right frame 1B. A side stand 70 is attached to a lower end of the left frame 1A positioned on the left side of the engine 8 such that the side stand 70 can support the motorcycle 100. The side stand 70 is configured to be switchable between a support state in which the side stand 70 supports the motorcycle 100 on the road surface and a non-support state in which the side stand 70 does not support the motorcycle 100 on the road surface. In the example of Fig. 1, the side stand 70 is in the non-support state.

A rear arm 9 is attached to the engine 8 to extend rearward from a rear end of the engine 8. A rear wheel 10 is rotatably supported at a rear end of the rear arm 9. Rotation of the rear wheel 10 is driven by power generated by the engine 8, so that a propulsive force of the motorcycle 100 is generated.

A front cover 20 is provided at a front portion of the motorcycle 100 so as to mainly cover the front fork 2 and a front end of the vehicle body frame 1. Further, a rear cover 28 is provided at a rear portion of the motorcycle 100 so as to cover a lower space in a rear half portion of the seat 7 from right and left and extend rearward of the seat 7. Further, a center cover 29 is provided at the center of the motorcycle 100 to connect the front cover 20 and the rear cover 28. The center cover 29 includes a pair of right and left foot boards 21, a tunnel cover 22, a pair of right and left side covers 23, and a pair of right and left lower covers 24.

The foot boards 21 are provided to extend in the front-and-rear direction L at positions, respectively, on the right side and the left side of the vehicle body frame 1 and the engine 8. Note that each foot board 21 according to this embodiment is formed of part of a plurality of cover members constituting the center cover 29. Only the left foot board 21 is denoted by the bold solid line in Fig. 1.

The tunnel cover 22 surrounds a space above and between the foot boards 21 from above, right and left. Note that the tunnel cover 22 according to this embodiment is formed of part of the plurality of cover members constituting the center cover 29. To facilitate the understanding of the shape of the tunnel cover 22, the tunnel cover 22 is denoted by a dot pattern in Fig. 1. Part of the vehicle body frame 1 and part of the engine 8 are stored inside of the tunnel cover 22.

The side covers 23 are formed to extend downward respectively from outer ends of the foot boards 21 in the right-and-left direction H. The lower covers 24 are formed to extend downward respectively from lower edges of the side covers 23. Note that each side cover 23 is formed of a single member, and each lower cover 24 is also formed of a single member.

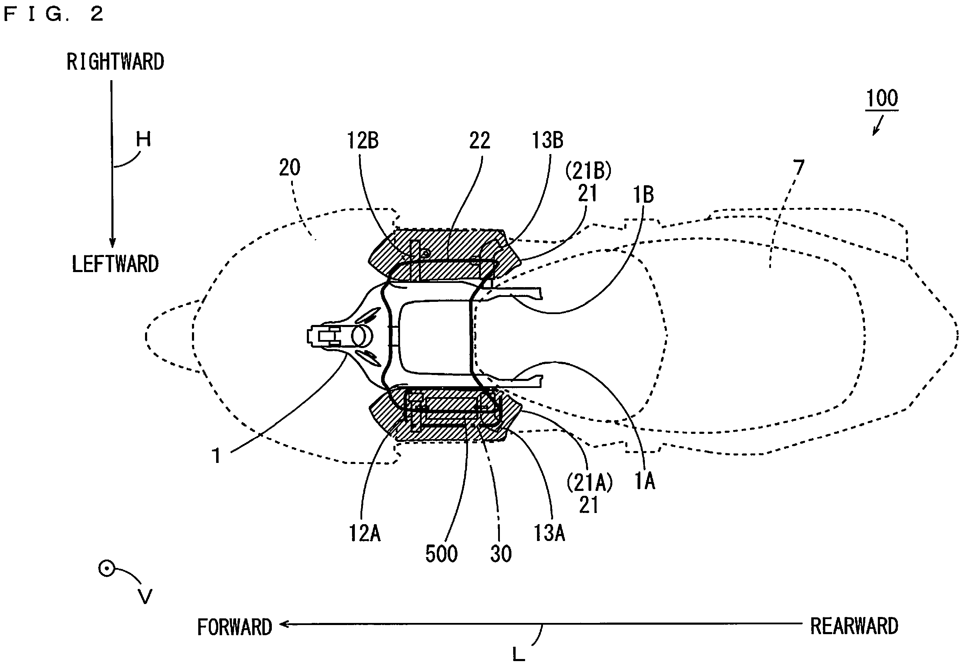

In the following description, the left foot board 21 of the foot boards 21 is referred to as the left foot board 21A, and the right foot board 21 is referred to as the right foot board 21B (Fig. 2) as necessary. The left side cover 23 of the side covers 23 is referred to as the left side cover 23A, and the left lower cover 24 of the lower covers 24 is referred to as the left lower cover 24A. To facilitate the understanding of the shape and position of the left side cover 23A, the left side cover 23A is hatched in Fig. 1. The left side cover 23A is configured to be attachable to and detachable from another portion of the center cover 29 including the left foot board 21A and the left lower cover 24A by use of a plurality of screws.

### [2] Storage Space for Tracking Device

At a position directly downward of the left foot board 21A and inside of the left side cover 23A, a storage space 30 for storing a tracking device 500 (Fig. 2) is formed to overlap with the left side cover 23A in the vehicle side view as indicated by the bold dot and dashed line of Fig. 1. The tracking device 500 has a function of radio-transmitting information indicating a current position of the motorcycle 100 to an administrator of the tracking device 500 when the motorcycle 100 has been stolen, for example. Details of the tracking device 500 will be described below.

Fig. 2 is a schematic plan view of the motorcycle 100 for mainly explaining a positional relationship between the storage space 30 and the left foot board 21A of Fig. 1. In the plan view of Fig. 2, part of the appearance of the motorcycle 100 is indicated by a dot line. On the other hand, the vehicle body frame 1 provided in the front cover 20 and the center cover 29 of Fig. 1 is indicated by a solid line. To facilitate the understanding of the shape and position of the tunnel cover 22 in the motorcycle 100, the appearance of the tunnel cover 22 is indicated by a bold solid line. Also, to facilitate the understanding of the shape and position of the pair of foot boards 21 in the motorcycle 100, the pair of foot boards 21 are hatched. As shown in Fig. 2, both side portions of the tunnel cover 22 in the right-and-left direction H overlap with the foot boards 21, respectively, in the vehicle plan view.

As shown in Fig. 2, two board supporters 12A, 13A extending leftward from a left side portion of the left frame 1A are fixed to the left frame 1A. These two board supporters 12A, 13A are aligned with a spacing in the front-and-rear direction L. The left foot board 21A is supported on the two board supporters 12A, 13A. Also, two board supporters 12B, 13B extending a certain distance rightward from a right side portion of the right frame 1B are fixed to the right frame 1B. These two board supporters 12B, 13B are aligned with a spacing in the front-and-rear direction L. The right foot board 21B is supported on the two board supporters 12B, 13B.

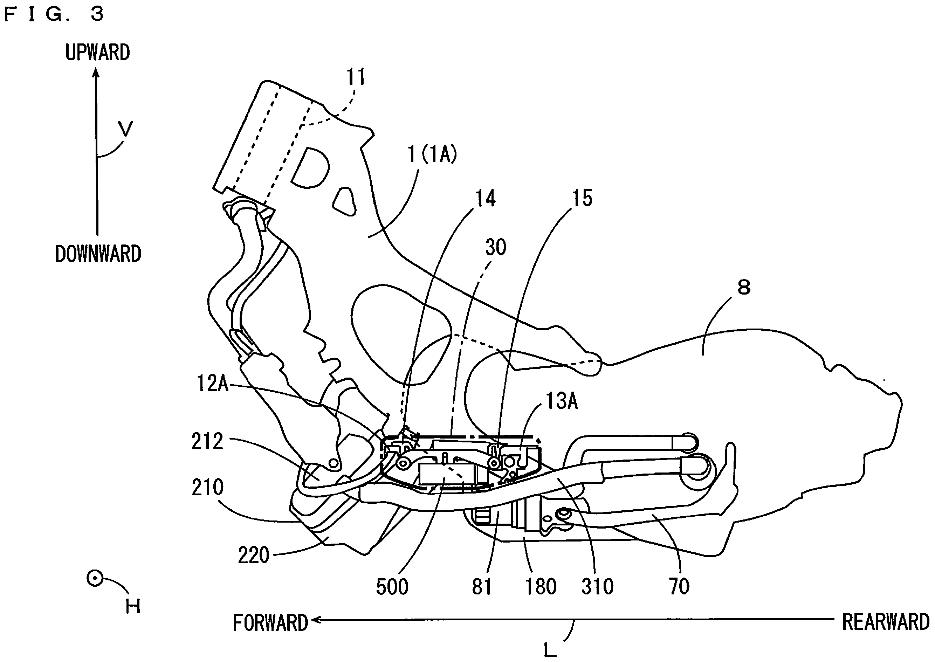

In this embodiment, the two board supporters 12A, 13A supporting the left foot board 21A are provided, respectively, with attachment members 14, 15 (Fig. 3) for attaching the tracking device 500. Details of the attachment members 14, 15 will be described below. The storage space 30 is formed to include a space at least between the two board supporters 12A and 13A. Attaching the tracking device 500 to the attachment members 14, 15 (Fig. 3) allows the tracking device 500 to be positioned in the storage space 30.

As described above, the storage space 30 overlaps with the left side cover 23A in the vehicle side view. Further, as shown in Fig. 2, the storage space 30 is positioned inside of the side covers 23 and also overlaps with the left foot board 21A in the vehicle plan view. In this case, the storage space 30 is protected from rainwater by the left foot board 21A and the left side cover 23A. Also, a radio wave absorber for blocking radio communication is not present in a space directly above the foot boards 21. As such, good communication environment for the tracking device 500 can be ensured with the tracking device 500 stored in the storage space 30.

As shown in Fig. 1, the motorcycle 100 includes a plurality of electric components including an ECU (Electronic Control Unit) 91, a battery 92, etc. in addition to the aforementioned configuration. The plurality of electric components are electrically connected to one another. As indicated by the bold two-dots and dashed line of Fig. 1, a main harness MH is attached to the vehicle body frame 1 and the rear frame 5 of the motorcycle 100 of this example. The main harness MH includes a plurality of harnesses.

Each of the plurality of harnesses of the main harness MH is a wire harness for wiring that includes one or a plurality of electrical wires. The wire harness is used, for example, to transmit an electrical signal between the ECU 91 and another electrical component or to supply electric power of the battery 92 to another electrical component.

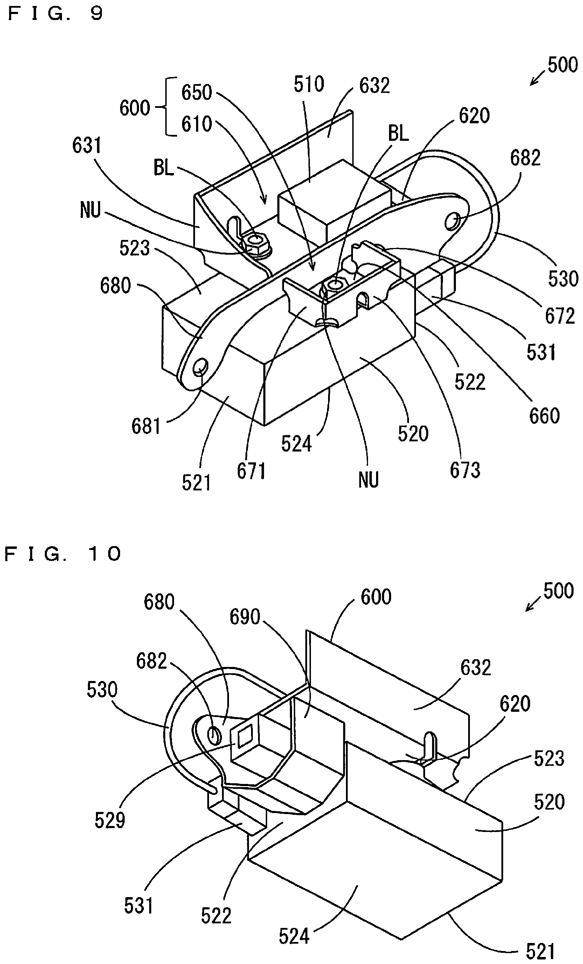

The main harness MH of Fig. 1 includes a harness HA that electrically connects the tracking device 500 stored in the storage space 30 with the ECU 91 and the battery 92 and also supplies the electric power of the battery 92 to a communication device 520 of the tracking device 500 (Fig. 9), which will be described later. Part of the harness HA is led into the storage space 30 inside of the center cover 29.

### [3] Peripheral Structure of Storage Space and Arrangement of Storage Space

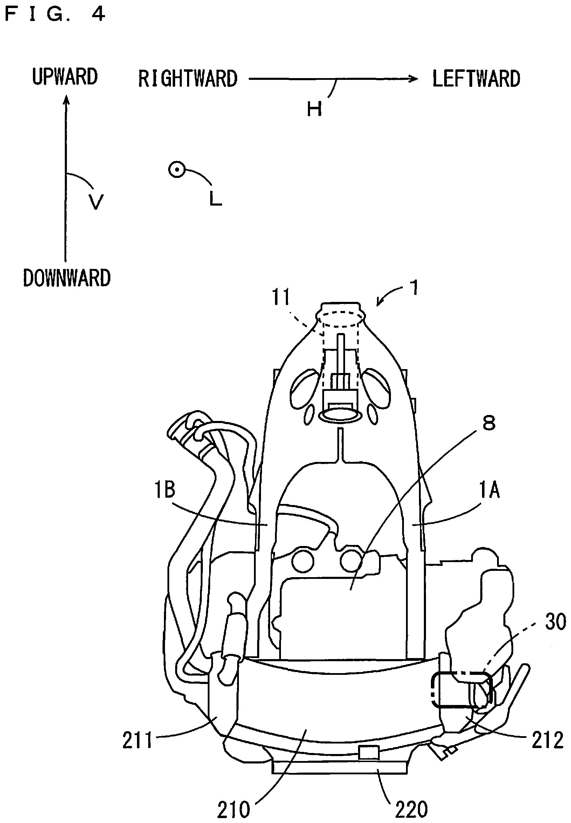

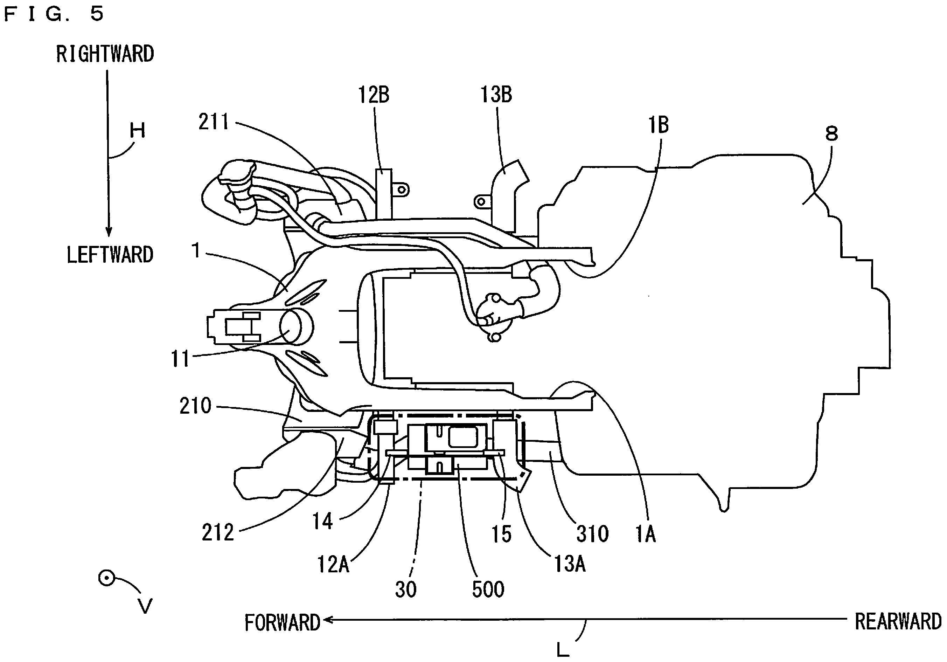

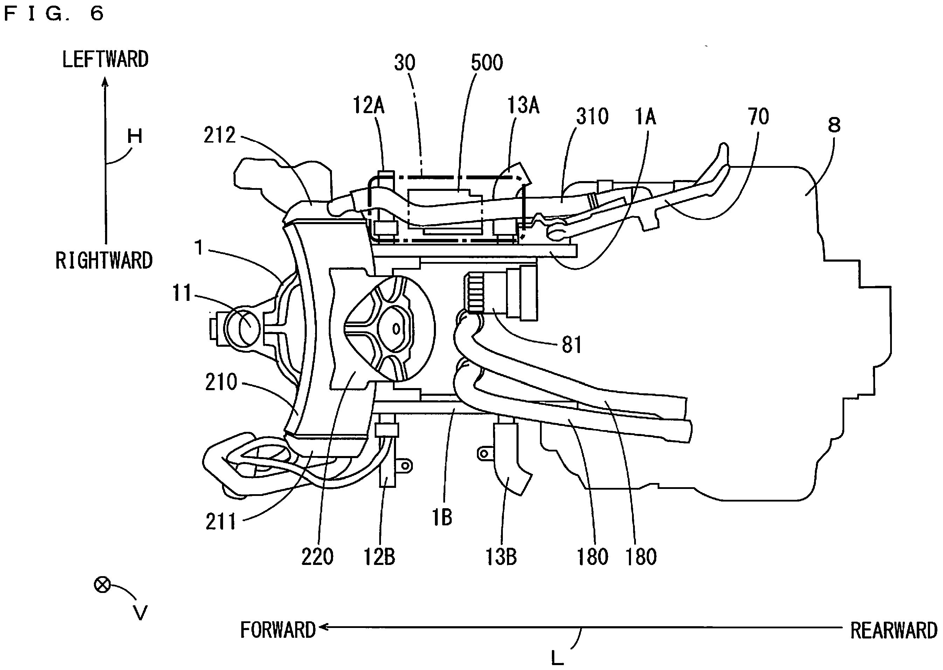

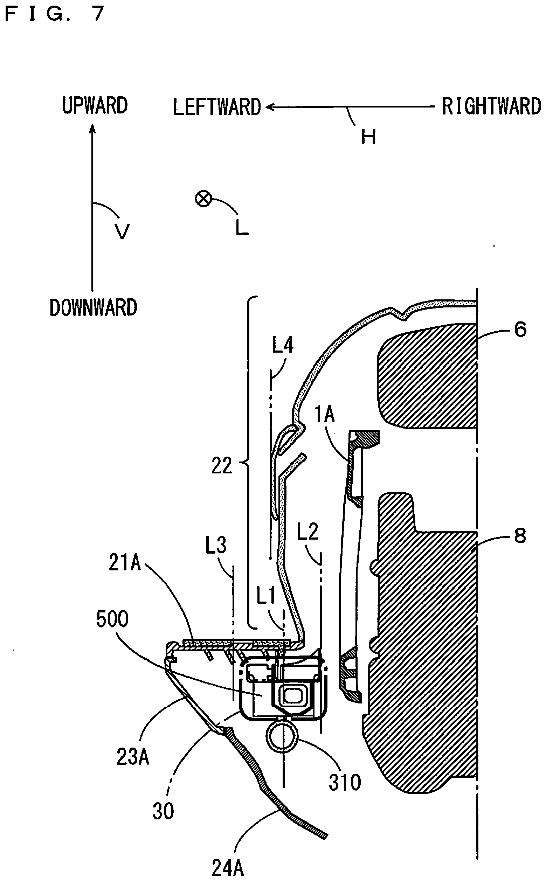

Fig. 3 is a left side view mainly showing the vehicle body frame 1 and the engine 8, and Fig. 4 is a front view mainly showing the vehicle body frame 1 and the engine 8. Fig. 5 is a plan view mainly showing the vehicle body frame 1 and the engine 8, and Fig. 6 is a bottom view mainly showing the vehicle body frame 1 and the engine 8. Fig. 7 is a cut portion end view of the left half portion of the motorcycle 100 which is taken along a vertical plane including the line A-A of Fig. 1.

As shown in Fig. 3, part of the storage space 30 overlaps with a portion in the vicinity of a lower end of the vehicle body frame 1 in the vehicle side view and also overlaps with a front half lower portion of the engine 8 in the vehicle side view. The attachment members 14, 15 for the tracking device 500 are provided in the storage space 30. With such a configuration, the left side cover 23A of Fig. 1 is present on the left side of the storage space 30, while part of the vehicle body frame 1 and part of the engine 8 are present on the right side of the storage space 30. As such, it becomes difficult to access the storage space 30 from the right and left sides of the motorcycle 100. Further, since the storage space 30 is present at a position close to the road surface, a thief of the motorcycle 100 who is in a standing position cannot remove the tracking device 500 stored in the storage space 30. This increases difficulty in removal of the tracking device 500 from the motorcycle 100.

As described above, part of the storage space 30 overlaps with the portion in the vicinity of the lower end of the vehicle body frame 1 and the front half lower portion of the engine 8 in the vehicle side view. Also, as shown in Fig. 5, part of the vehicle body frame 1 is disposed between the engine 8 and the storage space 30 in the vehicle plan view. In this case, noises generated from the engine 8 are absorbed by the vehicle body frame 1 during operation of the engine 8. Accordingly, the tracking device 500 attached to the storage space 30 is not affected by the noises generated from the engine 8. Thus, better communication environment for the tracking device 500 can be ensured.

As shown in Figs. 3, 4, 5 and 6, a radiator 210 is provided in front of a lower half portion of the engine 8. The radiator 210 includes a coolant lead-in port forming member 211 and a coolant lead-out port forming member 212. The lead-in port forming member 211 is provided at a right end of the radiator 210, and the lead-out port forming member 212 is provided at a left end of the radiator 210.

As shown in Fig. 4, the lead-out port forming member 212 of the radiator 210 overlaps with the storage space 30 in the vehicle front view. In this case, the radiator 210 makes it difficult to access the storage space 30 from a position in front of the motorcycle 100.

As shown in Figs. 3 and 5-7, a cooling pipe 310 is provided to connect the lead-out port forming member 212 of the radiator 210 and a left side portion of the engine 8. The cooling pipe 310 causes the coolant to flow into the engine 8 from the radiator 210. Also, the cooling pipe 310 is provided at a position under the storage space 30 to overlap with the storage space 30 in the vehicle plan view. Such arrangement of the cooling pipe 310 makes it more difficult to access the storage space 30 from a position below the motorcycle 100.

As shown in Fig. 6, a radiator fan 220 is attached to a rear portion of the radiator 210. Two exhaust pipes 180 connected to an exhaust port of the engine 8 are provided at a bottom portion of the engine 8 to extend in the front-and-rear direction L. Further, an oil element 81 for cleaning oil in the engine 8 is provided at the bottom portion of the engine 8.

A rear end of the radiator fan 220, front ends of the two exhaust pipes 180, and the oil element 81 are positioned on the right side of the storage space 30 and positioned between the left frame 1A and the right frame 1B in the vehicle plan view. In this case, the rear end of the radiator fan 220, the front ends of the two exhaust pipes 180, and the oil element 81 overlap with the tunnel cover 22 of Fig. 1 in the vehicle plan view. Also, as shown in Fig. 3, the rear end of the radiator fan 220, the front ends of the two exhaust pipes 180, and the oil element 81 are positioned further downward than the storage space 30. Such a configuration makes it more difficult to access the storage space 30 from a position below the right side of the motorcycle 100, which is opposite to the storage space 30.

Fig. 7 shows a virtual vertical line L1 passing through the center of the tracking device 500 in the right-and-left direction H, and a virtual vertical line L2 passing through an innermost edge of the tracking device 500 (a rightmost portion of the tracking device 500) in the right-and-left direction H. Fig. 7 also shows a virtual vertical line L3 passing through a center of the left foot board 21A in the right-and-left direction H, and a virtual vertical line L4 passing through an outermost edge of the tunnel cover 22 (a leftmost portion of the tunnel cover 22) in the right-and-left direction H.

As shown in Fig. 7, a left side portion of the tunnel cover 22 is formed to swell leftward (outside) and upward. A right side portion (not shown) of the tunnel cover 22 is formed to swell rightward (outside) and upward.

With reference to the virtual vertical lines L1, L3 of Fig. 7, the center of the tracking device 500 in the right-and-left direction H is positioned on a further inner side of the motorcycle 100 in the right-and-left direction H than the center of the left foot board 21A in the right-and-left direction H. More specifically, the tracking device 500 is arranged at a position closer to a vehicle center surface that is perpendicular to the right-and-left direction H of the motorcycle 100. In this case, the tracking device 500 is arranged at a position closer to the left frame 1A than the center of the left foot board 21A. As such, a large space is prevented from being formed between the tracking device 500 and the left frame 1A. That is, no work space for removing the tracking device 500 is formed between the tracking device 500 and the left frame 1A. It is thus difficult to remove the tracking device 500.

With reference to the virtual vertical lines L2, L4 of Fig. 7, an inner edge of the tracking device 500 in the right-and-left direction H is positioned on a further inner side of the motorcycle 100 in the right-and-left direction H than the outermost edge of the tunnel cover 22 in the right-and-left direction H. More specifically, the tracking device 500 is arranged at the position closer to the vehicle center surface, which is perpendicular to the right-and-left direction H of the motorcycle 100. In this case, since the tracking device 500 is arranged at a position closer to the left frame 1A, no work space for removing the tracking device 500 is formed between the tracking device 500 and the left frame 1A. It is thus difficult to remove the tracking device 500.

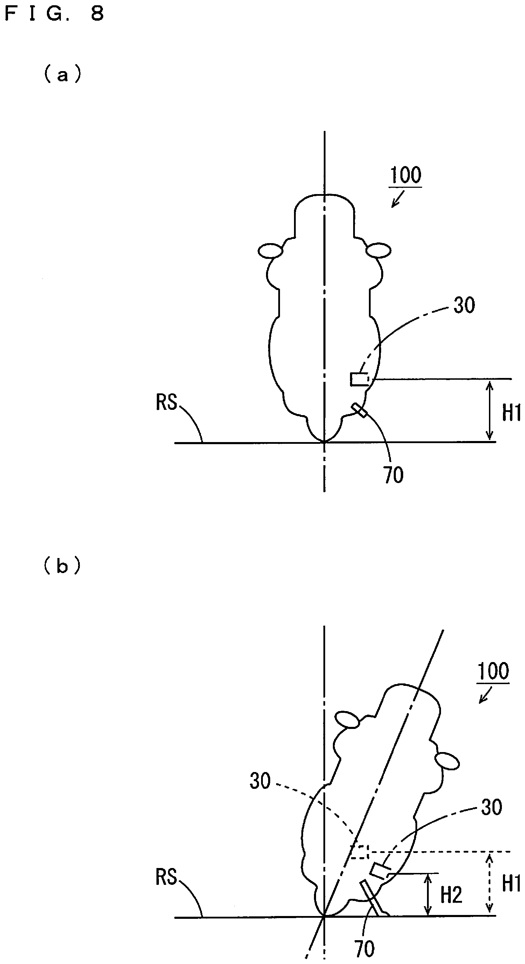

Fig. 8 is a schematic diagram showing a relationship between a position of the storage space 30 when the side stand 70 of Fig. 1 is in a non-support state and a position of the storage space 30 when the side stand 70 is in a support state. Fig. 8(a) shows a front view of the motorcycle 100 when the side stand 70 is in the non-support state. Fig. 8(b) shows a front view of the motorcycle 100 when the side stand 70 is in the support state.

As shown in Fig. 8(a), when the side stand 70 is in the non-support state and the motorcycle 100 travels in a straight line, the motorcycle 100 stands upright perpendicularly to the road surface RS. On the other hand, when the side stand 70 is in the support state and the motorcycle 100 is stopped, the motorcycle 100 stands in an inclined position against the road surface RS.

The storage space 30 and the side stand 70 are positioned further leftward than the center of the motorcycle 100 in the right-and-left direction H as shown in Fig. 6. As such, as shown in Figs. 8(a) and 8(b), a height H2 of the storage space 30 from the road surface RS when the side stand 70 is in the support state is lower than a height H1 of the storage space 30 from the road surface RS when the side stand 70 is in the non-support state. More specifically, the storage space 30, when the side stand 70 is in the support state, is at a position further downward than a position when the side stand 70 is in the non-support state and the motorcycle 100 stands upright.

As described above, when the motorcycle 100 is supported by the side stand 70, the storage space 30 is closer to the road surface RS. Thus, a gap between the left side cover 23A (Fig. 1) covering the storage space 30 and the road surface RS becomes smaller. This makes it possible to increase difficulty in removal of the tracking device 500 arranged in the storage space 30 from the motorcycle 100.

### [4] Details of Tracking Device

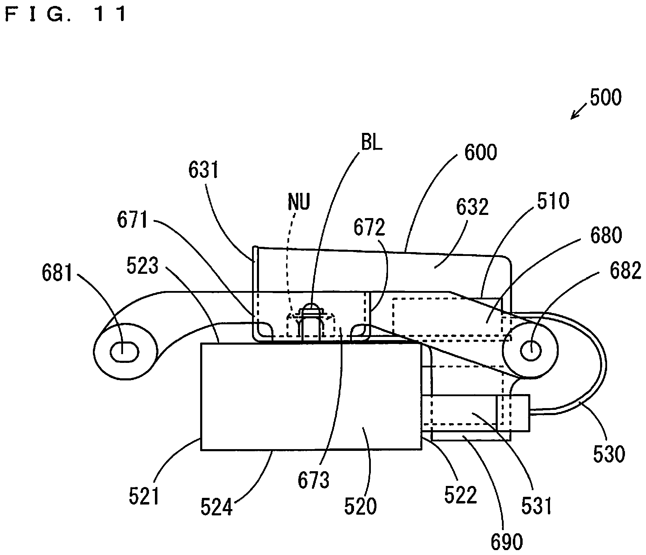

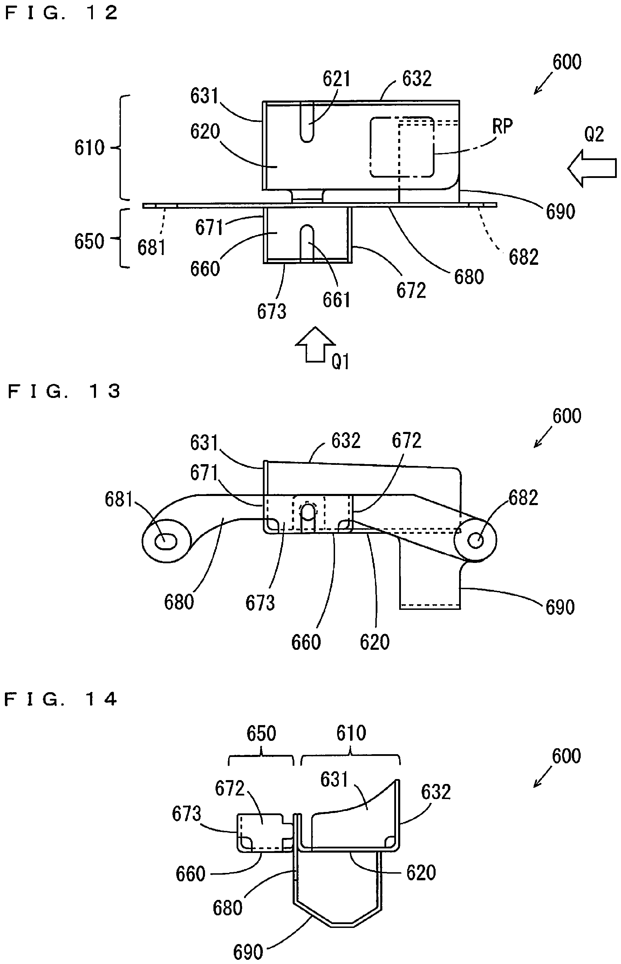

Fig. 9 is a perspective view of the appearance of the tracking device 500 as viewed from one direction, Fig. 10 is a perspective view of the appearance of the tracking device 500 of Fig. 9 as viewed from another direction, and Fig. 11 is a side view of the tracking device 500 of Fig. 9. Fig. 12 is a plan view of a holding member 600 included in the tracking device 500 of Fig. 9, Fig. 13 is a side view of the holding member 600 of Fig. 12 as viewed from an arrowed direction Q1, and Fig. 14 is a side view of the holding member 600 of Fig. 12 as viewed from an arrowed direction Q2.

As shown in Figs. 9-11, the tracking device 500 mainly includes an antenna 510, a communication device 520, a cable 530, and the holding member 600. The antenna 510 is an antenna for GPS (Global Positioning System), for example, and is used to acquire information as to a current position of the motorcycle 100 with the tracking device 500 attached to the motorcycle 100. An end of the cable 530 is connected to the antenna 510.

The communication device 520 has a front end surface 521, a rear end surface 522, an upper surface 523, and a lower surface 524. A power feed connector 529 and an antenna connector 531 are provided on the rear end surface 522 of the communication device 520. The harness HA of Fig. 1 is connected to the power feed connector 529. Thus, power from the battery 92 of Fig. 1 is supplied to the communication device 520. Another end of the cable 530 is connected to the antenna connector 531. The communication device 520 radio-transmits the information as to the current position acquired by the antenna 510 to the outside of the motorcycle 100.

The holding member 600 integrally holds the antenna 510 and the communication device 520. Details of the structure of the holding member 600 will now be described. A shown in Fig. 12, the holding member 600 has a configuration in which a right member 610 and a left member 650 are joined to each other. The right member 610 and the left member 650 are manufactured by processing a metallic plate-shaped member in respective predetermined shapes and also bending the members.

The right member 610 includes a right holding plate 620, a front wall 631, and a side wall 632 as shown in Figs. 12-14. The right holding plate 620 has a rectangular shape. The front wall 631 is formed to vertically extend upward from one longitudinal end of the right holding plate 620. The side wall 632 is formed to vertically extend upward from one lateral side of the right holding plate 620. The aforementioned antenna 510 is attached to a partial region RP of an upper surface of the right holding plate 620 by use of a screw or an adhesive as denoted by the one-dot and dashed line of Fig. 12. A long hole 621 is formed in a portion excluding the region of the right holding plate 620, to which the antenna 510 is attached.

The left member 650 includes a left holding plate 660, a front wall 671, a rear wall 672, a side wall 673, a support plate 680, and a connector peripheral wall 690. The left holding plate 660 has a smaller rectangular shape than the right holding plate 620. The right member 610 and the right holding plate 620 are joined together such that the right holding plate 620 and the left holding plate 660 are adjacent to each other on the same plane.

The front wall 671 is formed to vertically extend upward from one longitudinal end of the left holding plate 660. The rear wall 672 is formed to vertically extend upward from another longitudinal end of the left holding plate 660. The side wall 673 is formed to vertically extend upward from one lateral side of the right holding plate 620, which is positioned opposite to the right member 610. A long hole 661 is formed in the center of the left holding plate 660.

The strip-shaped support plate 680 is formed to vertically extend upward from another lateral side of the left holding plate 660 in proximity to the right member 610 and to further extend in a direction parallel to the other lateral side. The support plate 680 has a length larger than a longitudinal length of the right holding plate 620. Insertion holes 681, 682 are formed in one end and another end of the support plate 680, respectively. The connector peripheral wall 690 is formed to extend downward from a lower edge of the support plate 680 which is positioned between the left holding plate 660 and the other end of the support plate 680.

The connector peripheral wall 690 is formed by bending a strip-shaped plate member extending downward from the lower edge of the support plate 680. As shown in Fig. 14, the connector peripheral wall 690 is bent in a U shape at a position directly below the right member 610 when the holding member 600 of Fig. 12 is viewed in the arrowed direction Q2. A tip of the connector peripheral wall 690 is joined to a lower surface of the right holding plate 620.

As shown in Figs. 9 and 11, two stud bolts BL are provided at the communication device 520 to extend upward from the upper surface 523. In attachment of the communication device 520 to the holding member 600, the antenna 510 is first attached onto the partial region RP of the right holding plate 620 (Fig. 12). Then, the power feed connector 529 of the communication device 520 is inserted inside of the connector peripheral wall 690 as shown in Fig. 10. Also, the two stud bolts BL are inserted in the long holes 621, 661 formed in the right holding plate 620 and the left holding plate 660, respectively. In this state, two nuts NU are attached to the two stud bolts BL, respectively, so that the communication device 520 is fastened to the holding member 600 as shown in Figs. 9 and 11. Thus, the antenna 510 and the communication device 520 are integrally held by the holding member 600. Thereafter, the antenna 510 and the communication device 520 are electrically connected to each other via the cable 530.

Since the plurality of members are integrally held by the holding member 600 in the tracking device 500 in such a manner, an attachment work of attaching the tracking device 500 to the motorcycle 100 described below is facilitated.

### [5] Method of Attaching Tracking Device

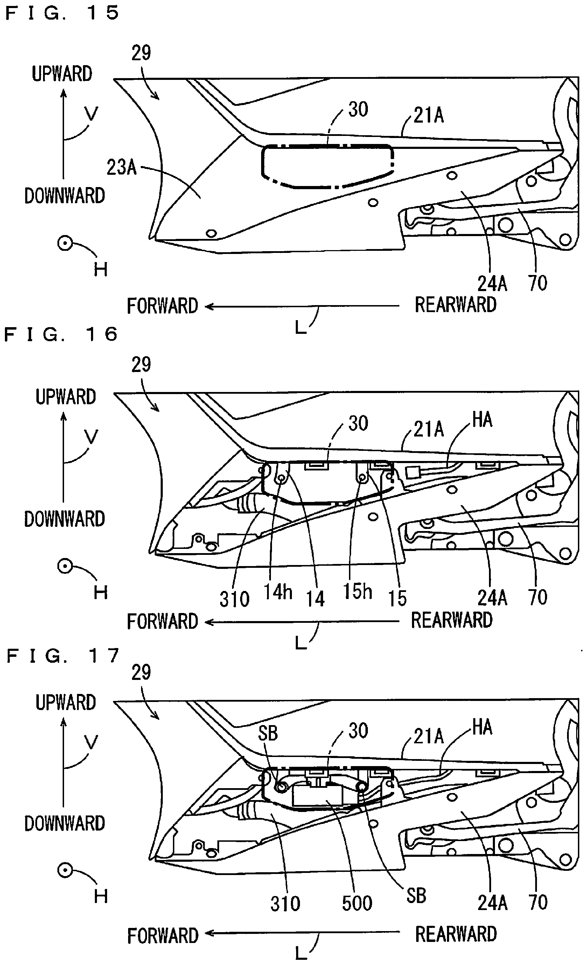

An example of a method of attaching the tracking device 500 to the motorcycle 100, to which the tracking device 500 is not yet attached will now be described. Figs. 15-17 are partially enlarged side views of the motorcycle 100 showing the method of attaching the tracking device 500. As described above, the left side cover 23A is configured to be attachable to and detachable from another portion of the center cover 29 including the left foot board 21A and the left lower cover 24A by use of a plurality of screws. In attachment of the tracking device 500, the left side cover 23A under the left foot board 21A is first removed. Fig. 15 shows the appearance of a peripheral potion of the storage space 30 before the left side cover 23A is removed.

As shown in Fig. 16, if the left side cover 23A is removed, an internal space of the center cover 29 including the storage space 30 is exposed on the left side of the motorcycle 100. The attachment members 14, 15 are arranged to be aligned in the front-and-rear direction L with a spacing from each other in the storage space 30. Insertion holes 14h, 15h, which correspond to the insertion holes 681, 682 (Figs. 11 and 13) formed in the holding member 600 of the tracking device 500, are formed in the attachment members 14, 15, respectively. Each of the insertions holes 14h, 15h is opened such that an axis of the insertion hole is directed outward of the left side cover 23A of Fig. 15.

Then, the tracking device 500 is prepared. The tracking device 500 is positioned such that the two insertion holes 681, 682 of the tracking device 500 (Figs. 11 and 13) overlap with the insertion holes 14h, 15h of the attachment members 14, 15, respectively, in the vehicle side view.

Next, as shown in Fig. 17, one shear bolt SB is inserted in the insertion hole 681 of the tracking device 500 and the insertion hole 14h of the attachment member 14. Also, one shear bolt SB is inserted in the insertion hole 682 of the tracking device 500 and the insertion hole 15h of the attachment member 15. At that time, since the axis of each insertion hole 14h, 15h of the attachment member 14, 15 is directed outward of the left side cover 23A of Fig. 15 as described above, an operator can easily insert the shear bolt SB into each insertion hole 14h, 15h from a position on the left side of the motorcycle 100.

Then, a nut not shown is attached to each shear bolt SB. In this manner, the support plate 680 of the tracking device 500 is fastened to the attachment members 14, 15 by use of the two shear bolts SB and the nut not shown.

Each shear bolt SB is a type of anti-theft bolt, used in many industries where robust permanent security fixing are required. Specifically, each shear bolt SB is a bolt that has a small diameter portion between a head and a shank. The small diameter portion is designed to be fractured by a predetermined fastening torque. In fastening of the support plate 680 and the attachment members 14, 15, a fastening torque that exceeds the predetermined fastening torque is applied to the head of each shear bolt SB. Thus, the head and the shank of each shear bolt SB are separated from each other while the support plate 680 and the attachment members 14, 15 are fastened together. As such, after the support plate 680 is attached to the attachment members 14, 15, it is impossible to loosen each shear bolt SB from a position further leftward than the attachment members 14, 15 and to remove the support plate 680. Thus, it is possible to further increase the difficulty in removing the tracking device 500 from the motorcycle 100.

Note that a female screw corresponding to a male screw of each shear bolt SB may be formed in advance at an inner peripheral surface of each of the insertion holes 14h, 15h of the attachment members 14, 15. Alternatively, a nut corresponding to each shear bolt SB may be joined to the attachment member 14, 15 in advance by welding or the like so as to overlap with the portion of the attachment member 14, 15 where the insertion hole 14h, 15h is formed. In this case, the fastening work by use of the shear bolt SB becomes more facilitated.

Thereafter, the harness HA led into the storage space 30 is connected to the power feed connector 529 (Fig. 10) provided at the communication device 520 (Fig. 10) of the tracking device 500. Accordingly, power of the battery 92 (Fig. 1) of the motorcycle 100 is supplied to the communication device 520 (Fig. 10) through the main harness MH (Fig. 1) and the harness HA. In this manner, the tracking device 500 is attached into the storage space 30.

Finally, the left side cover 23A is attached to the other portion of the center cover 29 including the left foot board 21A and the left lower cover 24A. The attachment work for the tracking device 500 is thus completed.

As shown in Fig. 10, the connector peripheral wall 690 and the right holding plate 620 of the holding member 600 surround a periphery of the power feed connector 529 of the communication device 520. In this case, the power feed connector 529 is protected by the connector peripheral wall 690 and the right holding plate 620. This prevents the power feed connector 529 from being broken, and ensures a connection state of the harness HA to the power feed connector 529, with the tracking device 500 attached to the motorcycle 100. Thus, supply of power from the battery 92 to the communication device 520 is ensured, and invalidation of various functions of the tracking device 500, which include a current position acquiring function and a communication function is prevented.

As shown in Fig. 9, the front wall 671, the rear wall 672, the side wall 673, and the support plate 680 of the holding member 600 surround a periphery of the one nut NU, which fastens the communication device 520 to the holding member 600. Also, as shown in Fig. 9, the front wall 631, the right member 610, and the support plate 680 of the holding member 600, and the antenna 510 surround a periphery of the other nut NU, which fastens the communication device 520 to the holding member 600. Further, as shown in Figs. 7 and 17, the left foot board 21A is positioned directly above the tracking device 500, with the tracking device 500 attached to the motorcycle 100. At that time, the left holding plate 660 of Fig. 9 in the tracking device 500 faces a lower surface of the left foot board 21A. Also, large part of the right holding plate 620 and the antenna 510 of Fig. 9 faces the lower surface of the left foot board 21A.

As a result, with the tracking device 500 attached to the motorcycle 100, the one nut NU is protected by the front wall 671, the rear wall 672, the side wall 673, and the support plate 680 of the holding member 600, and the left foot board 21A. Also, the other nut NU is protected by the front wall 631, the side wall 632, and the support plate 680 of the holding member 600, and the antenna 510 and by the left foot board 21A. Thus, the communication device 520 is prevented from being removed from the holding member 600, with the tracking device 500 attached to the motorcycle 100.

### [6] Effects

In the motorcycle 100 according to this embodiment, the storage space 30 for storing the tracking device 500 is formed below the left foot board 21A. As described above, the storage space 30 is protected from rainwater by the left foot board 21A and the left side cover 23A. Also, since no radio wave absorber is present in the space directly above the left foot board 21A, good communication environment for the tracking device 500 is ensured with the tracking device 500 stored in the storage space 30. Moreover, with the above-described configuration, since part of the left side cover 23A and part of the vehicle body frame 1 of Fig. 1 are present on the right and left sides of the storage space 30, it is difficult to access the storage space 30 from the right and left sides of the motorcycle 100. Further, the storage space 30 is present at a position close to the road surface. Accordingly, if the tracking device 500 is attached to the attachment members 14, 15 in the storage space 30, the thief of the motorcycle 100 who is in a standing position cannot remove the tracking device 500 in the storage space 30.

This makes it possible to ensure the communication environment of the tracking device 500 while protecting the tracking device 500 from rainwater, and also makes it possible to increase the difficulty in removal of the tracking device 500 from the motorcycle 100. Thus, with the tracking device 500 attached to the motorcycle 100, it is possible to easily and accurately confirm the current position of the motorcycle 100 by use of the tracking device 500.

Moreover, in attachment of the tracking device 500 to the motorcycle 100, the left side cover 23A under the left foot board 21A is removed, and the tracking device 500 is attached to the attachment members 14, 15 in the storage space 30. Thus, no cumbersome work is required to attach the tracking device 500 to the motorcycle 100.

### [7] Other not claimed Embodiments

(1) While the tracking device 500 is attached to the attachment members 14, 15 in the storage space 30 of the motorcycle 100 in the above-mentioned embodiment, the tracking device 500 does not need to be attached to the motorcycle 100. Even in such a case, no cumbersome work is required to attach the tracking device 500 to the motorcycle 100. Thus, a user can attach the tracking device 500 by a simple work as needed.
(2) While part of the storage space 30 overlaps with the portion in the vicinity of the lower end of the vehicle body frame 1 in the vehicle side view and also overlaps with the front half lower portion of the engine 8 in the vehicle side view in the above-mentioned embodiment, the present invention is not limited to this and is only defined by the wording of the claims.
   The vehicle body frame 1, the engine 8, and the storage space 30 are arranged or designed such that the part of the storage space 30 overlaps with a portion of the vehicle body frame 1, which is positioned further downward than the tunnel cover 22 in the vehicle side view and such that the storage space 30 does not overlap with the engine 8 in the vehicle side view. Even in such a case, since part of the vehicle body frame 1 is present on the right side of the storage space 30, it is possible to increase the difficulty in accessing the storage space 30 from the right side of the motorcycle 100. Note that when the storage space 30 does not overlap with the engine 8 in the vehicle side view, the entire engine 8 may be stored in the tunnel cover 22.
   Alternatively and not claimed, the vehicle body frame 1, the engine 8, and the storage space 30 may be arranged or designed such that the part of the storage space 30 overlaps with a portion of the engine 8, which is positioned further downward than the tunnel cover 22 in the vehicle side view and such that the storage space 30 does not overlap with the vehicle body frame 1 in the vehicle side view. Even in such a case, since part of the engine 8 is present on the right side of the storage space 30, it is possible to increase the difficulty in accessing the storage space 30 from the right side of the motorcycle 100.
(3) While part of the vehicle body frame 1 and part of the engine 8 are stored inside of the tunnel cover 22 in the above-mentioned embodiment, the present invention is not limited to this. A fuel tank in place of the engine 8 may be stored inside of the tunnel cover 22, together with the part of the vehicle body frame 1.

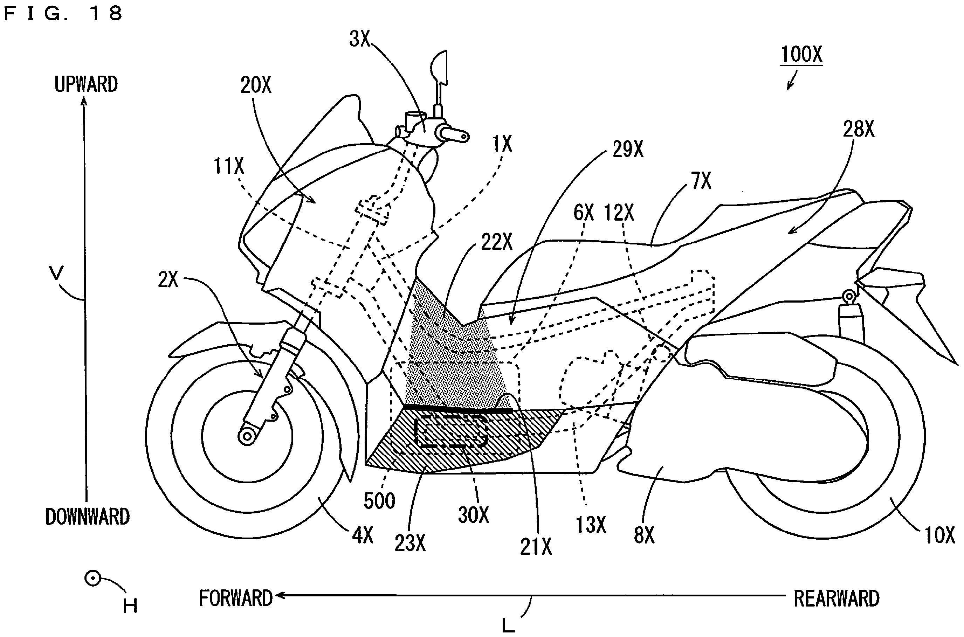

   Fig. 18 is a schematic side view of a motorcycle according to a not claimed embodiment. For a motorcycle 100X of this example, different points from the motorcycle 100 of Fig. 1 will now be described. The motorcycle 100X includes a vehicle body frame 1X corresponding to the vehicle body frame 1 of Fig. 1. A head pipe 11X is provided at a front end of the vehicle body frame 1X. The vehicle body frame 1X includes an upper frame 12X and a lower frame 13X. The upper frame 12X is formed to extend rearward while branching to the right and left from the head pipe 11X. The lower frame 13X extends obliquely downward and rearward while branching to the right and left from the head pipe 11X at a position further downward than the upper frame 12X, and the lower frame 13X is curved rearward.
   A front fork 2X is provided at the head pipe 11X to be swingable in the right-and-left direction H via a steering shaft not shown. A handle 3X is attached to an upper end of the front fork 2X, and a front wheel 4X is rotatably attached to a lower end of the front fork 2X.
   A seat 7X is provided on a rear half portion of the upper frame 12X to extend in the front-and-rear direction L. A unit swing type engine 8X is provided at a position directly downward of the seat 7X to extend rearward from a rear portion of the lower frame 13X. A fuel tank 6X is provided inside of the lower frame 13X, which branches to the right and left in a position further forward of the unit swing type engine 8X. A rear wheel 10X is rotatably attached to a vicinity of a rear end of the unit swing type engine 8X. The rear wheel 10X is rotated by power generated by the unit swing type engine 8X.
   The motorcycle 100X includes a front cover 20X, a rear cover 28X, and a center cover 29X which correspond to the front cover 20, the rear cover 28, and the center cover 29 of Fig. 1, respectively. The center cover 29X includes a pair of foot boards 21X, a tunnel cover 22X, and a pair of side covers 23X which correspond to the pair of foot boards 21, the tunnel cover 22, and the pair of side covers 23 of Fig. 1, respectively. In Fig. 18, the left foot board 21X is denoted by a bold solid line, the tunnel cover 22X is denoted by a dot pattern, and the left side cover 23X is hatched. A storage space 30X is provided to be positioned inside of the pair of side covers 23X and to overlap with the left foot board 21X in the vehicle plan view.
   In the example of Fig. 18, part of the vehicle body frame 1X and part of the fuel tank 6X are stored inside of the tunnel cover 22X, and the unit swing type engine 8X is not stored inside of the tunnel cover 22X. At least part of the storage space 30X overlaps with a portion of the vehicle body frame 1X positioned further downward than the tunnel cover 22X in the vehicle side view, and also overlaps with the fuel tank 6X in the vehicle side view. Even in such a case, since the part of the vehicle body frame 1X and the part of the fuel tank 6X are present on the right side of the storage space 30X, it is possible to increase difficulty in accessing the storage space 30X from the right side of the motorcycle 100X.
   Also, in the motorcycle 100X of Fig. 18, the vehicle body frame 1X, the fuel tank 6X, and the storage space 30X may be arranged or designed such that part of the storage space 30X overlaps with the portion of the vehicle body frame 1X, which is positioned further downward than the tunnel cover 22X in the vehicle side view and such that the storage space 30X does not overlap with the fuel tank 6X in the vehicle side view. Even in such a case, since the part of the vehicle body frame 1X is present on the right side of the storage space 30X, it is possible to increase the difficulty in accessing the storage space 30X from the right side of the motorcycle 100X. Note that when the storage space 30X does not overlap with the fuel tank 6X in the vehicle side view, the entire fuel tank 6X may be stored in the tunnel cover 22X.
   Alternatively, in a not claimed embodiment, the vehicle body frame 1X, the fuel tank 6X, and the storage space 30X may be arranged or designed such that the part of the storage space 30X overlaps with the portion of the fuel tank 6X, which is positioned further downward than the tunnel cover 22X in the vehicle side view and such that the storage space 30X does not overlap with the vehicle body frame 1X in the vehicle side view. Even in such a case, since the part of the fuel tank 6X is present on the right side of the storage space 30X, it is possible to increase the difficulty in accessing the storage space 30X from the right side of the motorcycle 100X.
(4) In the above-mentioned embodiment, the part of the engine 8 is stored inside of the tunnel cover 22 as an example of a vehicle component.
(5) While the storage space 30 for storing the tracking device 500 is formed directly below the left foot board 21A to overlap with the left foot board 21A in the vehicle plan view in the above-mentioned embodiment, the present invention is not limited to this. The storage space 30 may be formed directly below the right foot board 21B to overlap with the right foot board 21B instead of the left foot board 21A in the vehicle plan view. Even in this case, since part of the right side cover 23 and part of the vehicle body frame 1 are present on the right and left sides of the storage space 30, it becomes difficult to access the storage space 30 from the right and left sides of the motorcycle 100. Thus, similar effects to those of the above-mentioned embodiment can be achieved.
   Note that a pair of right and left storage spaces 30 may be formed directly below the pair of right and left foot boards 21 of the motorcycle 100, respectively. In this case, two tracking devices 500 may be attached in two storage spaces 30, respectively.
(6) While each of the pair of foot boards 21, the tunnel cover 22, the pair of side covers 23, and the pair of lower covers 24 is formed of a separate member in the above-mentioned embodiment, the present invention is not limited to this. For example, at least part of the tunnel cover 22, the pair of foot boards 21, the pair of side covers 23, and the pair of lower covers 24 may be integrally formed of a single cover member.
   For instance, the pair of foot boards 21 and the tunnel cover 22 may be formed of a single cover member, the left side cover 23 and the left lower cover 24 may be formed of a single cover member, and the right side cover 23 and the right lower cover 24 may be formed of a single cover member. In this case, the left side cover 23 and the left lower cover 24 are preferably configured to be attachable to and detachable from another portion of the center cover 29.
(7) While the above-mentioned embodiment is the example in which the present invention is applied to the motorcycle, the invention is not limited to this. The present invention may be applied to another vehicle such as a four-wheeled automobile, a motor tricycle, an ATV (All Terrain Vehicle) or the like.

### [8] Correspondences between Constituent Elements in Claims and Parts in Preferred Embodiments

In the following paragraphs, non-limiting examples of correspondences between various elements recited in the claims below and those described above with respect to various preferred embodiments of the present invention are explained, while the scope of protection is only defined by the wording of the appended claims.

In the above-mentioned embodiment, the vehicle body frame 1 is an example of a vehicle body frame, the engine 8 and the fuel tank 6X are examples of a vehicle component, the pair of foot boards 21, 21X is an example of a pair of foot boards, the tunnel cover 22, 22X is an example of a tunnel cover, the pair of side covers 23, 23X is an example of a pair of side covers, the left foot board 21A and the left foot board 21X of Fig. 18 are examples of at least one foot board, the tracking device 500 is an example of a tracking device, and the storage space 30, 30X is an example of a storage space.

The portion of the engine 8 positioned in the tunnel cover 22 and the portion of the fuel tank 6X positioned in the tunnel cover 22X are examples of part of the vehicle component, the portion of the vehicle body frame 1 positioned in the tunnel cover 22 and the portion of the vehicle body frame 1X positioned in the tunnel cover 22X are examples of part of the vehicle body frame, the portion of the engine 8 positioned further downward than the tunnel cover 22 and the portion of the fuel tank 6X positioned further downward than the tunnel cover 22X are examples of another portion of the vehicle component, the portion of the vehicle body frame 1 positioned in the tunnel cover 22 and the portion of the vehicle body frame 1X positioned in the tunnel cover 22X are examples of another portion of the vehicle body frame, the attachment member 14, 15 is an example of an attachment member, and the motorcycle 100, 100X is an example of the straddled vehicle.

Further, the antenna 510 is an example of an antenna, the communication device 520 is an example of a communication device, the holding member 600 is an example of a holding member, the shear bolt SB is an example of a shear bolt, the insertion hole 14h, 15h is an example of an insertion hole, the battery 92 is an example of a battery, the harness HA and the main harness MH are examples of a harness, the power feed connector 529 is an example of a connector, the connector peripheral wall 690 is an example of a connector peripheral wall, the nut NU is an example of a fastening member, the right holding plate 620 and the left holding plate 660 are examples of a holding plate, and the front wall 631, 671, the side wall 632, 673, the rear wall 672, and the support plate 680 are examples of a fastening member peripheral wall.

Also, the engine 8 is an example of an engine, the radiator 210 is an example of a radiator, the cooling pipe 310 is an example of a cooling pipe, a radiator fan 220 is an example of a radiator fan, the exhaust pipe 180 is an example of an exhaust pipe, the oil element 81 is an example of an oil element, the fuel tank 6X is an example of a fuel tank, and the side stand 70 is an example of a stand.

As each of constituent elements recited in the claims, various other elements having configurations or functions described in the claims can be also used.

The present invention can be effectively utilized for various types of straddled vehicles.

## Claims

1. A straddled vehicle (100), comprising:
a vehicle body frame (1);
a vehicle component supported by the vehicle body frame (1);
a pair of right and left foot boards (21A, 21B) extending in a vehicle front-and-rear direction (L);
a tunnel cover (22) provided to surround a space above and between the pair of foot boards (21A, 21B) from above, right and left;
a pair of right and left side covers (23) formed to extend downward from the right foot board (21B) and the left foot board (21A), respectively; and
a tracking device (500), wherein
the tunnel cover (22) is configured to store part of the vehicle body frame (1) and at least part of the vehicle component,
**characterized in that**
a storage space (30) storing the tracking device (500) is formed below at least one foot board of the pair of foot boards (21A, 21B), the storage space (30) being positioned inside of the pair of side covers (23), and overlapping with the at least one foot board (21A, 21B) in a vehicle plan view and overlapping with the pair of side covers (23) in a vehicle side view, the storage space (30) being arranged to overlap with at least one of another portion excluding the part of the vehicle body frame (1) and another portion excluding the part of the vehicle component in the vehicle side view,
the storage space (30) is provided with an attachment member (14, 15) to which the tracking device (500) is attached,
the vehicle component includes an engine (8),
the storage space (30) is configured to overlap with the engine (8) in the vehicle side view,
the storage space (30) is configured to overlap with the other portion of the vehicle body frame (1) in the vehicle side view, and
the other portion of the vehicle body frame (1) is arranged between the engine (8) and the storage space (30) in the vehicle plan view, such that noises generated from the engine (8) are absorbed by the vehicle body frame (1) during operation of the engine (8) and such that the tracking device (500) is not affected by the noises generated from the engine (8).

2. The straddled vehicle (100) according to claim 1, wherein
the tracking device (500) is arranged such that a center portion of the tracking device (500) in a vehicle right-and-left direction (H) is positioned further inward in the vehicle right-and-left direction (H) than a center portion of the at least one foot board (21A, 21B) in the vehicle right-and-left direction (H).

3. The straddled vehicle (100) according to claim 1 or 2, wherein
the tracking device (500) is arranged such that an inner edge of the tracking device (500) in the vehicle right-and-left direction (H) is positioned further inward in the vehicle right-and-left direction (H) than an outermost edge of the tunnel cover (22) in the vehicle right-and-left direction (H).

4. The straddled vehicle (100) according to any one of claims 1 to 3, wherein
the tracking device (500) includes
an antenna (510) for acquiring information as to a current position of the straddled vehicle (100),
a communication device (520) that is configured to radio-transmit the information as to the current position acquired by the antenna (510) to an outside of the straddled vehicle (100), and
a holding member (600) that is configured to hold the antenna (510) and the communication device (520),
the holding member (600) being attached to the attachment member (14, 15) by use of a shear bolt (SB).

5. The straddled vehicle (100) according to claim 4, wherein
the attachment member (14, 15) has an insertion hole (14h, 15h) in which the shear bolt (SB) is inserted,
the insertion hole (14h, 15h) being opened such that an axis of the insertion hole (14h, 15h) is directed outward of the side cover (23) corresponding to the at least one foot board (21A, 21B).

6. The straddled vehicle (100) according to claim 4 or 5, further comprising:
a battery (92); and
a harness (HA, MH) used as a power supply line that supplies power from at least the battery (92) to the communication device (520), wherein
the communication device (520) includes a connector (529) to which the harness (HA, MH) is connected, and
the holding member (600) includes a connector peripheral wall (690) provided to surround a periphery of the connector (529).

7. The straddled vehicle (100) according to any one of claims 4 to 6, wherein
the tracking device (500) further includes a fastening member (NU) that is configured to fasten the communication device (520) to the holding member (600), and
the holding member (600) includes
a holding plate (620, 660) to which the communication device (520) is fastened by the fastening member (NU), and
a fastening member peripheral wall (680) provided on the holding plate (620, 660) so as to surround a periphery of the fastening member (NU) while the communication device (520) is fastened to the holding member (600) by the fastening member (NU).

8. The straddled vehicle (100) according to any one of claims 1 to 7, further comprising:
a radiator (210); and
a cooling pipe (310) that is configured to cause a coolant to flow between the engine (8) and the radiator (210), wherein
the radiator (210) is provided in front of the storage space (30) in the vehicle front-and-rear direction (L) so as to overlap with the storage space (30) in a vehicle front view, and
the cooling pipe (310) is provided at a position below the storage space (30) so as to overlap with the storage space (30) in the vehicle plan view.

9. The straddled vehicle (100) according to claim 8, further comprising:
a radiator fan (220) provided at the radiator (210); and
an exhaust pipe (180) connected to an exhaust port of the engine (8), wherein
the engine (8) has an oil element (81), and
at least part of the radiator fan (220), at least part of the oil element (81), and at least part of the exhaust pipe (180) are provided at positions further downward than the storage space (30) so as to overlap with the tunnel cover (22) in the vehicle plan view.

10. The straddled vehicle (100) according to any one of claims 1 to 9, further comprising a stand (70) provided to be capable of supporting the vehicle (100) on a road surface, wherein
the storage space (30) is positioned further downward when the vehicle is supported by the stand (70) than when the vehicle stands upright.

11. A method of attaching a tracking device (500) to a straddled vehicle (100),
the straddled vehicle (100) comprising:
a vehicle body frame (1);
a vehicle component supported by the vehicle body frame (1);
a pair of right and left foot boards (21A, 21B) extending in a vehicle front-and-rear direction (L);
a tunnel cover (22) provided to surround a space above and between the pair of foot boards (21A, 21B) from above, right and left; and
a pair of right and left side covers (23) formed to extend downward from the right foot board (21B) and the left foot board (21A), respectively, wherein
the tunnel cover (22) is configured to store part of the vehicle body frame (1) and at least part of the vehicle component, and
a storage space (30) is formed below at least one foot board of the pair of foot boards (21A, 21B), the storage space (30) being positioned inside of the pair of side covers (23), and overlapping with the at least one foot board (21A, 21B) in a vehicle plan view and overlapping with the pair of side covers (23) in a vehicle side view, the storage space (30) being arranged to overlap with at least one of another portion excluding the part of the vehicle body frame (1) and another portion excluding the part of the vehicle component in the vehicle side view,
**characterized in that**
the method includes the steps of:
removing the side cover (23) under the at least one foot board (21A, 21B); and attaching the tracking device (500) to be positioned in the storage space (30) by use of an attachment member (14, 15), wherein
the vehicle component includes an engine (8),
the storage space (30) is configured to overlap with the engine (8) in the vehicle side view,
the storage space (30) is configured to overlap with the other portion of the vehicle body frame (1) in the vehicle side view, and
the other portion of the vehicle body frame (1) is arranged between the engine (8) and the storage space (30) in the vehicle plan view, such that noises generated from the engine (8) are absorbed by the vehicle body frame (1) during operation of the engine (8) and such that the tracking device (500) is not affected by the noises generated from the engine (8).

## Patentansprüche

1. Spreizsitz-Fahrzeug (100), das umfasst:
einen Fahrzeug-Karosserierahmen (1);
eine Fahrzeugkomponente, die von dem Fahrzeug-Karosserierahmen (1) getragen wird;
ein Paar aus einem rechten und einem linken Trittbrett (21A, 21B), die sich in einer Fahrzeug-Längsrichtung (L) erstrecken;
eine Tunnelverkleidung (22), die so eingerichtet ist, dass sie einen Raum oberhalb der paarigen Trittbretter (21A, 21B) sowie zwischen ihnen von oben, von rechts und von links umschließt;
ein Paar aus einer rechten und einer linken Seitenverkleidung (23), die so ausgebildet sind, dass sie sich von dem rechten Trittbrett (21B) bzw. dem linken Trittbrett (21A) nach unten erstrecken; sowie
eine Ortungsvorrichtung (500), wobei
die Tunnelverkleidung (22) so ausgeführt ist, dass sie einen Teil des Fahrzeug-Karosserierahmens (1) und wenigstens einen Teil der Fahrzeugkomponente aufnimmt,
**dadurch gekennzeichnet, dass**
ein Aufnahmeraum (30), der die Ortungsvorrichtung (500) aufnimmt, unter wenigstens einem Trittbrett des Paars von Trittbrettern (21A, 21B) ausgebildet ist, wobei der Aufnahmeraum (30) innerhalb des Paars von Seitenverkleidungen (23) positioniert ist und
sich in einer Fahrzeug-Draufsicht mit dem wenigstens einen Trittbrett (21A, 21A, 21B) überlappt und sich in einer Fahrzeug-Seitenansicht mit dem Paar von Seitenverkleidungen (23) überlappt, wobei der Aufnahmeraum (30) so angeordnet ist, dass er sich in der Fahrzeug-Seitenansicht mit einem anderen Abschnitt, der den Teil des Fahrzeug-Karosserierahmens (1) ausschließt, oder/und einem anderen Abschnitt überlappt, der den Teil der Fahrzeugkomponente ausschließt,
der Aufnahmeraum (30) mit einem Anbringungselement (14, 15) versehen ist, an dem die Ortungsvorrichtung (500) angebracht ist,
die Fahrzeugkomponente einen Motor (8) einschließt,
der Aufnahmeraum (30) so ausgeführt ist, dass er sich in der Fahrzeug-Seitenansicht mit dem Motor (8) überlappt,
der Aufnahmeraum (30) so ausgeführt ist, dass er sich in der Fahrzeug-Seitenansicht mit dem anderen Abschnitt des Fahrzeug-Karosserierahmens (1) überlappt, und
der andere Abschnitt des Fahrzeug-Karosserierahmens (1) in der Fahrzeug-Draufsicht zwischen dem Motor (8) und dem Aufnahmeraum (30) angeordnet ist, so dass von dem Motor (8) erzeugte Geräusche während des Betriebs des Motors (8) durch den Fahrzeug-Karosserierahmen (1) absorbiert werden und die Ortungsvorrichtung (500) durch die von dem Motor (8) erzeugten Geräusche nicht beeinflusst wird.

2. Spreizsitz-Fahrzeug (100) nach Anspruch 1, wobei
die Ortungsvorrichtung (500) so angeordnet ist, dass ein Mittelabschnitt der Ortungsvorrichtung (500) in einer Fahrzeug-Querrichtung (H) weiter innen in der Fahrzeug-Querrichtung (H) positioniert ist als ein Mittelabschnitt des wenigstens einen Trittbretts (21A, 21B) in der Fahrzeug-Querrichtung (H).

3. Spreizsitz-Fahrzeug (1) nach Anspruch 1 oder 2, wobei
die Ortungsvorrichtung (500) so angeordnet ist, dass eine innere Kante der Ortungsvorrichtung (500) in der Fahrzeug-Querrichtung (H) weiter innen in der Fahrzeug-Querrichtung (H) positioniert ist als eine äußerste Kante der Tunnelverkleidung (21A, 21B) in der Fahrzeug-Querrichtung (H).

4. Spreizsitz-Fahrzeug (100) nach einem der Ansprüche 1 bis 3, wobei die Ortungsvorrichtung (500) enthält:
eine Antenne (510) zum Erfassen von Informationen hinsichtlich einer aktuellen Position des Spreizsitz-Fahrzeugs (100),
eine Kommunikationsvorrichtung (520), die so ausgeführt ist, dass sie die durch die Antenne (510) erfassten Informationen hinsichtlich der aktuellen Position per Funk von dem Spreizsitz-Fahrzeug (100) nach außen überträgt, sowie
ein Halteelement (600), das so ausgeführt ist, dass es die Antenne (510) und die Kommunikationsvorrichtung (520) hält,
wobei das Halteelement (600) unter Verwendung eines Scherbolzens (SB) an dem Befestigungselement (14, 15) angebracht ist.

5. Spreizsitz-Fahrzeug (100) nach Anspruch 4, wobei:
das Anbringungselement (14, 15) ein Einführungsloch (14h, 15h) aufweist, in das der Scherbolzen (SB) eingeführt ist,
wobei das Einführungsloch (14h, 15h) sich so öffnet, dass eine Achse des Einführungslochs (14h, 15h) in Entsprechung zu dem wenigstens einen Trittbrett (21A, 21B) von der Seitenverkleidung (23) nach außen gerichtet ist.

6. Spreizsitz-Fahrzeug (100) nach Anspruch 4 oder 5, das des Weiteren umfasst:
eine Batterie (92); sowie
einen Kabelbaum (HA, MH), der als Stromversorgungsleitung dient, die der Kommunikationsvorrichtung (520) Strom wenigstens von der Batterie (92) zuführt, wobei die Kommunikationsvorrichtung (520) einen Verbinder (529) enthält, mit dem der Kabelbaum (HA, MH) verbunden ist, und
das Halteelement (600) eine Verbinder-Umfangswand (690) enthält, die so eingerichtet ist, dass sie einen Umfang des Verbinders (529) umschließt.

7. Spreizsitz-Fahrzeug (100) nach einem der Ansprüche 4 bis 6, wobei die Ortungsvorrichtung (500) des Weiteren ein Befestigungselement (NU) enthält, das zum Befestigen der Kommunikationsvorrichtung (520) an dem Halteelement (600) ausgeführt ist, und
das Halteelement (600) einschließt:
eine Halteplatte (620, 660), an der die Kommunikationsvorrichtung (520) mit dem Befestigungselement (NU) befestigt ist, sowie
eine Umfangswand (680) des Befestigungselementes, die an der Halteplatte (620) vorhanden ist und einen Umfang des Befestigungselementes (NU) umschließt, wenn die Kommunikationsvorrichtung (520) mit dem Befestigungselement (NU) an dem Halteelement (600) befestigt ist.

8. Spreizsitz-Fahrzeug (100) nach einem der Ansprüche 1 bis 7, das des Weiteren umfasst:
einen Kühler (210); sowie
ein Kühlrohr (310), das so ausgeführt ist, dass es ein Kühlmittel zwischen dem Motor (8) und dem Kühler (210) strömen lässt, wobei
der Kühler (210) in der Fahrzeug-Längsrichtung (L) vor dem Aufnahmeraum (30) vorhanden ist und sich in einer Fahrzeug-Vorderansicht mit dem Aufnahmeraum (30) überlappt, und
das Kühlrohr (310) an einer Position unterhalb des Aufnahmeraums (30) vorhanden ist und sich in der Fahrzeug-Draufsicht mit dem Aufnahmeraum (30) überlappt.

9. Spreizsitz-Fahrzeug (100) nach Anspruch 8, das des Weiteren umfasst:
einen Kühlerlüfter (220), der an dem Kühler (210) vorhanden ist; sowie ein Auspuffrohr (180), das mit einem Auslasskanal des Motors (8) verbunden ist, wobei der Motor (8) ein Öl-Element (81) aufweist, und
wenigstens ein Teil des Kühlerlüfters (220), wenigstens ein Teil des Öl-Elementes (81) und wenigstens ein Teil des Auspuffrohrs (180) an Positionen vorhanden sind, die weiter unten liegen als der Aufnahmeraum (30), so dass sie sich in der Fahrzeug-Draufsicht mit der Tunnelverkleidung (22) überlappen.

10. Spreizsitz-Fahrzeug (1) nach einem der Ansprüche 1 bis 9, das des Weiteren einen Ständer (70) umfasst, der das Fahrzeug (100) auf einer Straßenoberfläche stützen kann, wobei
der Aufnahmeraum (30), wenn das Fahrzeug von dem Ständer (70) gestützt wird, weiter unten positioniert ist als dann, wenn das Fahrzeug aufrecht steht.

11. Verfahren zum Anbringen einer Ortungsvorrichtung (500) an einem Spreizsitz-Fahrzeug (100),
wobei das Spreizsitz-Fahrzeug (100) umfasst:
einen Fahrzeug-Karosserierahmen (1);
eine Fahrzeugkomponente, die von dem Fahrzeug-Karosserierahmen (1) getragen wird;
ein Paar aus einem rechten und einem linken Trittbrett (21A, 21B), die sich in einer Fahrzeug-Längsrichtung (L) erstrecken;
eine Tunnelverkleidung (22), die so eingerichtet ist, dass sie einen Raum oberhalb der paarigen Trittbretter (21A, 21B) und zwischen ihnen von oben, von rechts und von links umschließt; sowie
ein Paar aus einer rechten und einer linken Seitenverkleidung (23), die so ausgebildet sind, dass sie sich von dem rechten Trittbrett (21B) bzw. dem linken Trittbrett (21A) nach unten erstrecken; wobei
die Tunnelverkleidung (22) so ausgeführt ist, dass sie einen Teil des Fahrzeug-Karosserierahmens (1) und wenigstens einen Teil der Fahrzeugkomponente aufnimmt, und
ein Aufnahmeraum (30) unter wenigstens einem Trittbrett des Paars von Trittbrettern (21A, 21B) ausgebildet ist, wobei der Aufnahmeraum (30) innerhalb des Paars von Seitenverkleidungen (23) positioniert ist und sich in einer Fahrzeug-Draufsicht mit dem wenigstens einen Trittbrett (21A, 21A, 21B) überlappt und sich in einer Fahrzeug-Seitenansicht mit dem Paar von Seitenverkleidungen (23) überlappt, und der Aufnahmeraum (30) so angeordnet ist, dass er sich in der Fahrzeug-Seitenansicht mit einem anderen Abschnitt, der den Teil des Fahrzeug-Karosserierahmens (1) ausschließt, oder/und einem anderen Abschnitt überlappt, der den Teil der Fahrzeugkomponente ausschließt,
**dadurch gekennzeichnet, dass**
das Verfahren die folgenden Schritte einschließt:
Entfernen der Seitenverkleidung (23) unter dem wenigstens einen Trittbrett (21A, 21B); sowie
Anbringen der in dem Aufnahmeraum (30) zu positionierenden Ortungsvorrichtung (500) unter Verwendung eines Anbringungselementes (14, 15), wobei
die Fahrzeugkomponente einen Motor (8) einschließt,
der Aufnahmeraum (30) so ausgeführt ist, dass er sich in der Fahrzeug-Seitenansicht mit dem Motor (8) überlappt,
der Aufnahmeraum (30) so ausgeführt ist, dass er sich in der Fahrzeug-Seitenansicht mit dem anderen Abschnitt des Fahrzeug-Karosserierahmens (1) überlappt, und
der andere Abschnitt des Fahrzeug-Karosserierahmens (1) in der Fahrzeug-Draufsicht zwischen dem Motor (8) und dem Aufnahmeraum (30) angeordnet ist, so dass von dem Motor (8) erzeugte Geräusche während des Betriebs des Motors (8) durch den Fahrzeug-Karosserierahmen (1) absorbiert werden und die Ortungsvorrichtung (500) durch die von dem Motor (8) erzeugten Geräusche nicht beeinflusst wird.

## Revendications

1. Véhicule à enfourcher (100) comprenant :
un châssis de carrosserie de véhicule (1) ;
un composant de véhicule supporté par le châssis de carrosserie de véhicule (1) ;
une paire de repose-pieds droit et gauche (21A, 21B) s'étendant dans une direction avant et arrière de véhicule (L) ;
un couvercle de tunnel (22) prévu pour entourer un espace au-dessus et entre la paire de repose-pieds (21A, 21B) depuis le dessus, la droite et la gauche ;
une paire de couvercles latéraux droit et gauche (23) formés pour s'étendre vers le bas depuis le repose-pied droit (21B) et le repose-pied gauche (21A), respectivement ; et
un dispositif de suivi (500), dans lequel
le couvercle de tunnel (22) est configuré pour stocker une partie du châssis de carrosserie de véhicule (1) et au moins une partie du composant de véhicule,
**caractérisé en ce que**
un espace de stockage (30) stockant le dispositif de suivi (500) est formé sous au moins un repose-pied de la paire de repose-pieds (21A, 21B), l'espace de stockage (30) étant positionné à l'intérieur de la paire de couvercles latéraux (23), et chevauchant le au moins un repose-pied (21A, 21B) sur une vue en plan de véhicule et chevauchant la paire de couvercles latéraux (23) sur une vue de côté de véhicule, l'espace de stockage (30) étant agencé pour chevaucher au moins une parmi une autre partie excluant la partie du châssis de carrosserie de véhicule (1) et une autre partie excluant la partie du composant de véhicule sur la vue de côté de véhicule, et l'espace de stockage (30) est muni d'un élément d'attache (14, 15) auquel le dispositif de suivi (500) est attaché,
le composant de véhicule comprend un moteur (8),
l'espace de stockage (30) est configuré pour chevaucher le moteur (8) sur la vue de côté de véhicule
l'espace de stockage (30) est configuré pour chevaucher l'autre partie du châssis de carrosserie de véhicule (1) sur la vue de côté de véhicule, et
l'autre partie du châssis de carrosserie de véhicule (1) est disposée entre le moteur (8) et l'espace de stockage (30) sur la vue en plan de véhicule, de sorte que des bruits générés par le moteur (8) sont absorbés par le châssis de carrosserie de véhicule (1) pendant un fonctionnement du moteur (8) et de sorte que le dispositif de suivi (500) n'est pas affecté par les bruits générés par le moteur (8).

2. Véhicule à enfourcher (100) selon la revendication 1, dans lequel le dispositif de suivi (500) est agencé de telle sorte qu'une partie centrale du dispositif de suivi (500) dans une direction droite et gauche de véhicule (H) est positionnée davantage vers l'intérieur dans la direction droite et gauche de véhicule (H) qu'une partie centrale du au moins un repose-pied (21A, 21B) dans la direction droite et gauche de véhicule (H).

3. Véhicule à enfourcher (100) selon la revendication 1 ou 2, dans lequel le dispositif de suivi (500) est agencé de telle sorte qu'un bord intérieur du dispositif de suivi (500) dans la direction droite et gauche de véhicule (H) est positionné davantage vers l'intérieur dans la direction droite et gauche de véhicule (H) qu'un bord le plus à l'extérieur du couvercle de tunnel (22) dans la direction droite et gauche de véhicule (H).

4. Véhicule à enfourcher (100) selon l'une quelconque des revendications 1 à 3, dans lequel
le dispositif de suivi (500) comprend
une antenne (510) pour acquérir des informations concernant une position actuelle du véhicule à enfourcher (100),
un dispositif de communication (520) qui est configuré pour transmettre par radio les informations concernant la position actuelle acquise par l'antenne (510) vers un extérieur du véhicule à enfourcher (100), et
un élément de maintien (600) qui est configuré pour maintenir l'antenne (510) et le dispositif de communication (520),
l'élément de maintien (600) étant attaché à l'élément d'atache (14, 15) en utilisant un boulon de cisaillement (SB).

5. Véhicule à enfourcher (100) selon la revendication 4, dans lequel l'élément d'attache (14, 15) présente un trou d'insertion (14h, 15h) dans lequel le boulon de cisaillement (SB) est inséré,
le trou d'insertion (14h, 15h) étant ouvert de telle sorte qu'un axe du trou d'insertion (14h, 15h) est dirigé vers l'extérieur du couvercle latéral (23) correspondant au au moins un repose-pied (21A, 21B).

6. Véhicule à enfourcher (100) selon la revendication 4 ou 5, comprenant en outre :
une batterie (92) ; et
un faisceau (HA, MH) utilisé en tant que ligne d'alimentation en énergie qui fournit de l'énergie depuis au moins la batterie (92) au dispositif de communication (520), dans lequel
le dispositif de communication (520) comprend un connecteur (529) auquel le faisceau (HA, MH) est connecté, et
l'élément de maintien (600) comprend une paroi périphérique de connecteur (690) prévue pour entourer une périphérie du connecteur (529).

7. Véhicule à enfourcher (100) selon l'une quelconque des revendications 4 à 6, dans lequel
le dispositif de suivi (500) comprend en outre un élément de fixation (NU) qui est configuré pour fixer le dispositif de communication (520) à l'élément de maintien (600), et
l'élément de maintien (600) comprend
une plaque de maintien (620, 660) à laquelle le dispositif de communication (520) est fixé par l'élément de fixation (NU), et
une paroi périphérique d'élément de fixation (680) agencée sur la plaque de maintien (620, 660) de manière à entourer une périphérie de l'élément de fixation (NU) alors que le dispositif de communication (520) est fixé à l'élément de maintien (600) par l'élément de fixation (NU).

8. Véhicule à enfourcher (100) selon l'une quelconque des revendications 1 à 7, comprenant en outre :
un radiateur (210) ; et
un tuyau de refroidissement (310) qui est configuré pour amener un liquide de refroidissement à circuler entre le moteur (8) et le radiateur (210), dans lequel le radiateur (210) est agencé devant l'espace de stockage (30) dans la direction avant et arrière de véhicule (L) de manière à chevaucher l'espace de stockage (30) sur une vue de face de véhicule, et
le tuyau de refroidissement (310) est agencé à une position sous l'espace de stockage (30) de manière à chevaucher l'espace de stockage (30) sur la vue en plan de véhicule.

9. Véhicule à enfourcher (100) selon la revendication 8, comprenant en outre :
un ventilateur de radiateur (220) agencé au niveau du radiateur (210) ; et
un tuyau d'échappement (180) connecté à un orifice d'échappement du moteur (8), dans lequel
le moteur (8) a un élément d'huile (81), et
au moins une partie du ventilateur de radiateur (220), au moins une partie de l'élément d'huile (81), et au moins une partie du tuyau d'échappement (180) sont agencées à des positions davantage vers le bas que l'espace de stockage (30) de manière à chevaucher le couvercle de tunnel (22) sur la vue en plan de véhicule.

10. Véhicule à enfourcher (100) selon l'une quelconque des revendications 1 à 9, comprenant en outre une béquille (70) prévue pour être capable de supporter le véhicule (100) sur une surface de route, dans lequel
l'espace de stockage (30) est positionné davantage vers le bas lorsque le véhicule est supporté par la béquille (70) que lorsque le véhicule se tient debout.

11. Procédé d'attache d'un dispositif de suivi (500) à un véhicule à enfourcher (100), le véhicule à enfourcher (100) comprenant :
un châssis de carrosserie de véhicule (1) ;
un composant de véhicule supporté par le châssis de carrosserie de véhicule (1) ;
une paire de repose-pieds droit et gauche (21A, 21B) s'étendant dans une direction avant et arrière de véhicule (L) ;
un couvercle de tunnel (22) prévu pour entourer un espace au-dessus et entre la paire de repose-pieds (21A, 21B) depuis le dessus, la droite et la gauche ; et
une paire de couvercles latéraux droit et gauche (23) formés pour s'étendre vers le bas depuis le repose-pied droit (21B) et le repose-pied gauche (21A), respectivement, dans lequel
le couvercle de tunnel (22) est configuré pour stocker une partie du châssis de carrosserie de véhicule (1) et au moins une partie du composant de véhicule, et
un espace de stockage (30) est formé sous au moins un repose-pied de la paire de repose-pieds (21A, 21B), l'espace de stockage (30) étant positionné à l'intérieur de la paire de couvercles latéraux (23), et chevauchant le au moins un repose-pied (21A, 21B) sur une vue en plan de véhicule et chevauchant la paire de couvercles latéraux (23) sur une vue de côté de véhicule, l'espace de stockage (30) étant agencé pour chevaucher au moins une parmi une autre partie excluant la partie du châssis de carrosserie de véhicule (1) et une autre partie excluant la partie du composant de véhicule sur la vue de côté de véhicule, et
**caractérisé en ce que**
le procédé comprend les étapes consistant à :
retirer le couvercle latéral (23) sous le au moins un repose-pied (21A, 21B) ; et
attacher le dispositif de suivi (500) à positionner dans l'espace de stockage (30) en utilisant un élément d'attache (14, 15), dans lequel
le composant de véhicule comprend un moteur (8),
l'espace de stockage (30) est configuré pour chevaucher le moteur (8) sur la vue de côté de véhicule
l'espace de stockage (30) est configuré pour chevaucher l'autre partie du châssis de carrosserie de véhicule (1) sur la vue de côté de véhicule, et
l'autre partie du châssis de carrosserie de véhicule (1) est disposée entre le moteur (8) et l'espace de stockage (30) sur la vue en plan de véhicule, de sorte que des bruits générés par le moteur (8) sont absorbés par le châssis de carrosserie de véhicule (1) pendant un fonctionnement du moteur (8) et de sorte que le dispositif de suivi (500) n'est pas affecté par les bruits générés par le moteur (8).
